# EUROPEAN PATENT APPLICATION

(11) **EP 3 623 114 A1**
(43) Date of publication of application: **18.03.2020**
(21) Application number: 19159666.7
(22) Date of filing: 27.02.2019
(51) Int. Cl.: B25J 9/16, B65G 59/00, B65G 61/00, G05B 19/418

(54) **UNLOADING APPARATUS AND METHOD OF DETECTING PACKAGE**

(30) Priority: 11.09.2018 JP 2018169592
(71) Applicant: Kabushiki Kaisha Toshiba, Minato-ku Tokyo 105-8001 (JP)
(72) Inventor: Sugahara, Atsushi, Tokyo, 105-8001 (JP); Nakamoto, Hideichi, Tokyo, 105-8001 (JP)
(74) Representative: Hoffmann Eitle

(57) **Abstract**

An unloading apparatus includes a placement, a movement mechanism, a camera and a support. The movement mechanism is configured to move a package toward the placement. The camera is attached to a lower side of the placement and directs to the package carrying platform. The camera is configured to detect a bottom side of the package. The support enables the camera to detect the bottom side of the package while supporting an adjacent package to a lower side of the bottom side of the package when the package is taken out from the package carrying platform and placed on the placement.

## Description

### FIELD

The present disclosure relate to an unloading apparatus configured to unload a package placed on a package carrying platform, and a method of detecting a package adjacent to the package.

### BACKGROUND

In recent years, in the logistics industry, automation is being promoted. Examples of promoting the automation include palletizing (loading). This is work of stacking boxes shaped in the same manner on a flat platform called a pallet. For the palletizing, a vertical articulated industrial robot or a linear motion system is used. The opposite work is depalletizing (unloading). This is work of bringing down the boxes put on the pallet. The depalletizing is automated to some extent for boxes shaped in the same manner.

For example, in the courier industry, wagons (package carrying platforms) with bars in three directions called cargo wagons are used. Normally, packages are taken in and out from the face of the wagon without shelf. In the wagon, boxes with different sizes and bags with appropriate shapes are loaded as packages.

In a case of using an apparatus that automatically performs depalletizing to take out packages from a package carrying platform, the packages loaded on the package carrying platform are recognized by an upper camera disposed above the package carrying platform and a side camera disposed on the side of the package carrying platform to detect the position and posture of the package that should be removed from the package carrying platform. Then, this apparatus removes the package by, for example, a robot hand while supporting, by a support, a package under the package that should be removed.

With the apparatus at this time, the package under the package that should be removed is supported by the support. At this time, there may be, for example, a support between the package that should be removed next and the upper camera. Thus, depending on the timing, there may be a case where it is difficult to determine the package that should be removed next. Therefore, in the apparatus, for example, the package that should be removed is removed, the support between the package loaded on the package carrying platform and the upper camera is retracted, and then the package that should be removed next is determined.

### BRIEF DESCRIPTION OF THE DRAWINGS

FIG. 1A is a schematic view showing a state where a distal end of a placement is disposed under a package desired to be taken out while a package is held by a support of an unloading apparatus in a package takeout system according to a first example;
FIG. 1B is a schematic view showing a state where the unloading apparatus and the package carrying platform of the package takeout system shown in FIG. 1A are inclined;
FIG. 2A is a schematic view showing an image when the package carrying platform is photographed by the first camera of the package takeout system shown in FIG. 1A;
FIG. 2B is a schematic view showing a state where image processing is performed on the image shown in FIG. 2A, and the boundaries (bold solid lines) between the packages in the front row and the packages in the rear row, the uppermost sides (bold alternate long and short dash lines) of the packages in the front row, and the bottom sides (bold dashed lines) of the packages are extracted;
FIG. 3 is a schematic block diagram of the package takeout system shown in FIGS. 1A and 1B;
FIG. 4 is a schematic perspective view showing the relationship among the placement, the second camera and the support of the unloading apparatus of the package takeout system shown in FIGS. 1A and 1B;
FIG. 5 is a schematic view showing a state where the packages shown in FIG. 1A are photographed by the second camera shown in FIG. 4, and the bottom side of each package is extracted by image processing;
FIG. 6 is an example of a processing flow of the package takeout system shown in FIGS. 1A and 1B;
FIG. 7 is a schematic perspective view showing the relationship among a placement, a second camera and a support of an unloading apparatus of a package takeout system according to a first modification example of the first example;
FIG. 8 is a schematic perspective view showing the relationship among a placement, a second camera and a support of an unloading apparatus of a package takeout system according to a second modification example of the first example;
FIG. 9A is a schematic view showing a case where there is a shelf in a package carrying platform and a state where a distal end of a placement is disposed under a package desired to be taken out while a package on the package carrying platform is held by a support of an unloading apparatus in a package takeout system according to a second example;
FIG. 9B is a schematic view showing a case where there is no shelf in a package carrying platform and a state where the distal end of the placement is disposed under a package desired to be removed to draw, by a grip, the package desired to be removed while a package on the package carrying platform is held by the support of the unloading apparatus in the package takeout system according to the second example;
FIG. 10 is a schematic block diagram of the package takeout system shown in FIGS. 9A and 9B;
FIG. 11 is a schematic view showing a state where image processing is performed on an image of the package carrying platform photographed by the first camera of the package takeout system shown in FIGS. 9A and 9B, and the boundaries (bold solid lines) between the packages in the front row and the packages in the rear row, the uppermost sides (bold alternate long and short dash lines) of the packages in the front row, and the bottom sides (bold dashed lines) of the packages are extracted;
FIG. 12A is an example of a processing flow of the package takeout system shown in FIGS. 9A and 9B;
FIG. 12B is an example of a processing flow of the package takeout system shown in FIGS. 9A and 9B in the case where there is no shelf in the package carrying platform;
FIG. 13 is a schematic view showing a state where a package is grasped by a method different from the methods shown in FIGS. 9A and 9B in the unloading apparatus of the package takeout system according to the second example;
FIG. 14 is a schematic view showing a package takeout system according to a third example;
FIG. 15A is an example of a processing flow of the package takeout system shown in FIG. 14;
FIG. 15B is an example of a processing flow of the package takeout system shown in FIG. 14 when a package is removed from the package carrying platform by using the second camera;
FIG. 16A is a schematic view showing a state where a region including the bottom side of a package is being photographed by the second camera attached to the lower side of the lower support;
FIG. 16B is a schematic view showing a state where the front face of a package desired be removed is stuck fast by the grip in a state where the distal end of the lower support abuts a package under the bottom side of the package desired to be removed;
FIG. 16C is a schematic view showing a state where a package is stuck fast by the grip to be removed in a state where the distal end of the lower support abuts a package under the bottom side of the package desired to be removed;
FIG. 17 is a schematic view showing a state where the bottom side of the package desired to be removed could not have been recognized when the region including the bottom side of the package desired to be removed is photographed by the second camera attached to the lower side of the lower support;
FIG. 18A is a schematic view showing a first modification example of the third example and a state where a region including a bottom side of package is being photographed by a second camera attached to the lower side of a lower support;
FIG. 18B is a schematic view showing a state where the distal end (the displacement sensor) of the lower support abuts the front face of the package desired to be removed;
FIG. 18C is a schematic view showing a state where the distal end of the lower support abuts a package under the bottom side of the package desired to be removed;
FIG. 18D is a schematic view showing a state where a package is stuck fast by the grip to place the package on the lower support in a state where the distal end of the lower support abuts the package under the bottom side of the package desired to be removed;
FIG. 19 is a schematic block diagram of the package takeout system according to the first modification example of the third example;
FIG. 20A is an example of a processing flow of the package takeout system according to the first modification example of the third example when the package is removed from the package carrying platform by using the displacement sensor shown in FIGS. 18A to 18D;
FIG. 20B is an example of a processing flow for performing contact confirmation processing for the displacement sensor in FIG. 20A;
FIG. 21A is a schematic view showing an example of the lower support shown in FIGS. 14 and 16A to 18D in a package takeout system according to a second modification example of the third example;
FIG. 21B is a schematic view showing an example of the lower support shown in FIGS. 14 and 16A to 18D in a package takeout system according to a third modification example of the third example; and
FIG. 22 is a schematic view showing an application example in which a displacement sensor in a package takeout system according to a fourth modification example of the third example is disposed at the conveyor of the placement or the cylinder of the support of the second example.

### DETAILED DESCRIPTION

Hereinafter, examples will be described with reference to the drawings.

### (FIRST EXAMPLE)

As a conventional system, there is a system (tipper system) in which the entire package carrying platform is slanted obliquely, and a plurality of packages are taken out to the outside at once by the gravity and then carried by a belt conveyor. When the packages are taken out from the package carrying platform at once by the gravity, there is a concern the packages hit each other and one or more (one or a plurality of) packages will be damaged.

Thereupon, in the present example, even as the tipper system, a package takeout system 10 that makes the number of packages removed simultaneously as few as possible such as one or two and can prevent the damage of the packages is provided. That is, in the present example, an example will be described in which an apparatus 14 of the system 10 does not use a robot hand.

An objective according to the first example is to provide an unloading apparatus that can recognize in an earlier stage a package removed next and a method of detecting a package adjacent to the package while preventing package collapse in a case of repeating work of removing a package from a package carrying platform where packages with various shapes, such as a box shape and a bag shape, are present.

According to the first example, an unloading apparatus includes a placement, a movement mechanism, a camera and a support. The placement directs to a package carrying platform loaded with a package and on which the package is placed when the package is taken out from the package carrying platform. The movement mechanism is configured to move the package toward the placement. The camera is attached to a lower side of the placement and directs to the package carrying platform. The camera is configured to detect a bottom side of the package. The support enables the camera to detect the bottom side of the package while supporting an adjacent package to a lower side of the bottom side of the package when the package is taken out from the package carrying platform and placed on the placement.

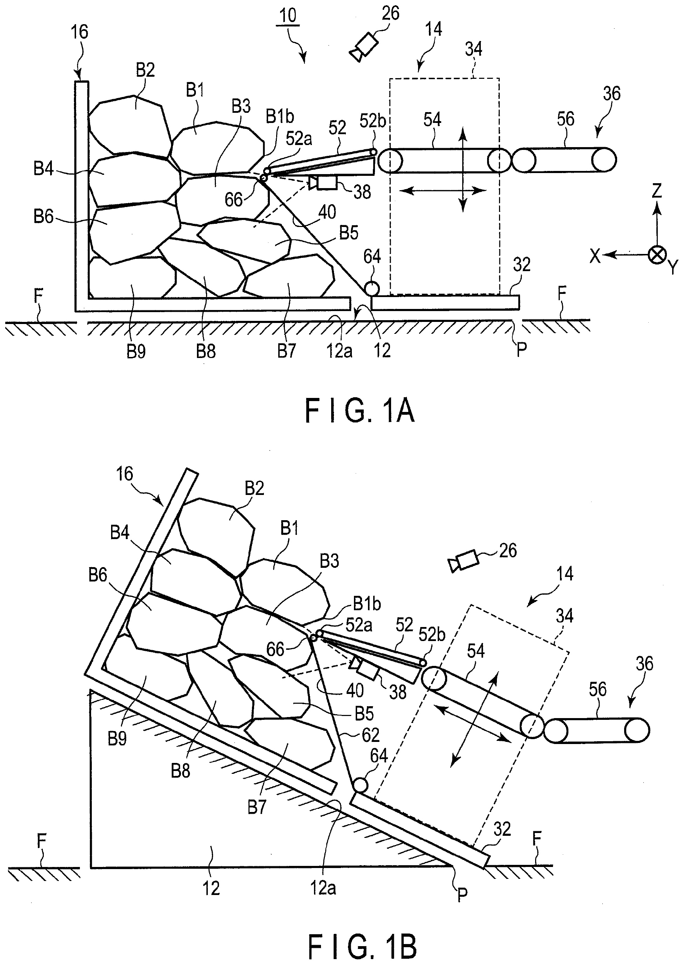

In a package carrying platform (wagon) 16 shown in FIG. 1A, a plurality of packages B1, B2 and so on are placed in a disorganized manner. One having bars in three directions is used as the package carrying platform 16 described in the present example and examples described later.

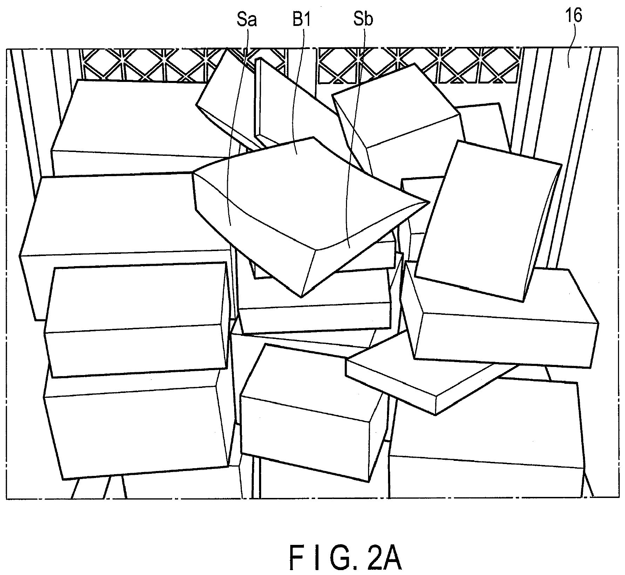

FIG. 2A shows a schematic view of the packages B1, B2 and so on photographed by a first camera 26 described later. FIG. 2A shows a bird's-eye view of the packages loaded on the package carrying platform 16 obtained by photographing, by the first camera 26. A controller 22, which will be described later, extracts three visible sides from the image information if the package that should be taken out has a box shape. Examples of the three sides to be extracted are the upper boundary of the box-shaped package, the side of the corner of the front face and the bottom side.

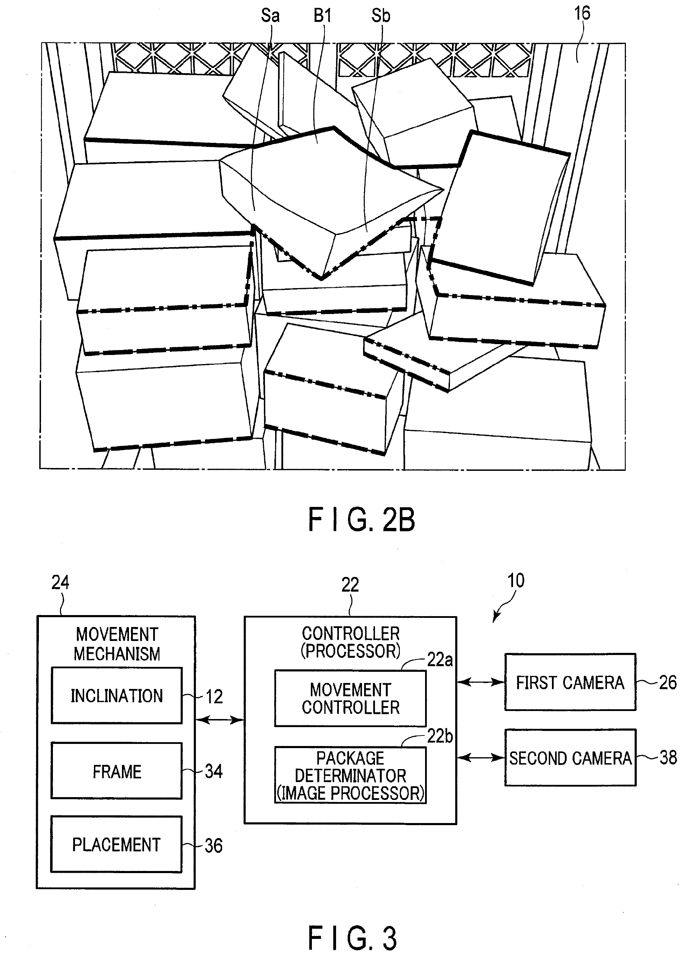

FIG. 2B shows a state where image processing is performed, by a package determinator (image processor) 22b of the controller 22, on the packages B1, B2 and so on photographed by the first camera 26, and the boundaries (bold solid lines) between the packages in the front row and the packages in the rear row, the uppermost sides (bold alternate long and short dash lines) of the packages in the front row, and the bottom sides (bold dashed lines) of the packages are extracted.

The package takeout system 10 has an inclination 12 having an inclination face 12a which inclines with respect to a floor F, the unloading apparatus 14 and the package carrying platform 16. Note that the inclination face 12a can move between a state where the inclination face 12a is flush with the floor F (see FIG. 1A) and an inclined state where the inclination face 12a is inclined with respect to the floor F (see FIG. 1B).

As shown in FIG. 3, the package takeout system 10 has the controller (processor) 22, a movement mechanism 24 controlled by the controller 22, and the first camera 26. Herein, a description will be given of a case where the number of first cameras 26 is one at a position front of and above the package carrying platform 16 as shown in FIG. 1A. Thus, the first camera 26 can photograph the overlooked side of the package carrying platform 16 without shelf from obliquely above. Note that the number of first cameras 26 may be plural such as two, one above the package carrying platform 16 and one at the front of the package carrying platform 16. In this case, the controller 22 can synthesize a plurality of images by image processing and extract the boundaries (bold solid lines) between the front row and the rear row, the uppermost sides (bold alternate long and short dash lines) of the front row, the bottom sides (bold dashed lines) and the like in the same manner as shown in FIG. 2B.

The controller 22 and the movement mechanism 24 can be used as part of the unloading apparatus 14. That is, the unloading apparatus 14 can include the controller 22 and the movement mechanism 24.

The controller 22 has, for example, a movement controller 22a that controls the movement mechanism 24, and the package determinator (an image processor) 22b that performs image processing on image information from both the first camera (an RGB sensor) 26 and a second camera (an RGB-Depth sensor) 38 described later. The movement controller 22a controls the movement mechanism 24 to operate as appropriate according to the image processing results in the package determinator (the image processor) 22b. Note that when the controller (processor) 22 determines something, the controller (processor) 22 outputs an appropriate signal. That is, determining something by the controller (processor) 22 involves the controller (processor) 22 outputting the appropriate signal.

The controller 22 is a computer including, for example, a processor such as a CPU, and storage apparatuses such as a ROM, a RAM, a memory, an auxiliary storage and a hard disk drive. A program is installed in advance in the controller 22. The controller 22 can control a frame 34 described later and the camera 38 as automated devices by the program. The automated devices may include the camera 26 and the like.

Note that the controller 22 is realized by executing, with the processor such as a CPU, the program stored in the memory, but is not limited thereto. Part of or the entire controller 22 may be realized by hardware such as an LSI, an ASIC or an FPGA.

By being controlled by the controller 22, the movement mechanism 24 is used to rotationally move the inclination face 12a of the inclination 12 with a position indicated by the symbol P as a fulcrum to an appropriate angle with respect to the floor F as well as to move the frame 34 to an appropriate position with respect to a base 32 described later. The fulcrum P of the inclination 12 is, for example, suitably parallel to a Y-axis described later. Moreover, the apparatus 14 is moved to an appropriate position with respect to the package carrying platform 16. That is, the movement mechanism 24 is used to move the first camera 26, the second camera 38 and the frame 34. Thus, the controller 22 and the movement mechanism 24 are part of the package takeout system 10 as well as are used as part of the apparatus 14.

The unloading apparatus 14 according to the present example has the base (a fixed portion) 32, the frame 34 supported by the base 32, a placement 36 which is provided in the frame 34 and on which one or more packages B1 and B2 are put, the second camera 38, and a support 40 that supports the packages B3 and so on under the one or more packages B1 and B2.

In the present example, a description is given where the package carrying platform 16 can move with respect to the apparatus 14 and an exchanged package carrying platform 16 is moved with respect to the apparatus 14 and directed to an appropriate state. The apparatus 14 itself may be movable toward the package carrying platform 16. Moreover, the package carrying platform 16 and the apparatus 14 may be relatively movable.

Herein, an XYZ orthogonal coordinate system is adopted as shown in FIG. 1A. The apparatus 14 sets an X-axis and the Y-axis in parallel (a direction orthogonal to the direction of gravity) to the floor. A Z-axis coincides with the direction of gravity. The direction in which the package carrying platform 16 directs to the apparatus 14 is a positive X-axis direction. A negative X-axis direction is the direction in which the packages B1, B2 and so on removed from the package carrying platform 16 are conveyed. A positive Y-axis direction is the direction from the left direction to the right direction in the image captured by the camera 38, and a negative Y-axis direction is the direction from the right direction to the left direction in the image captured by the camera 38. A positive Z-axis direction is the direction from the lower side to the upper side in the vertical direction, and a negative Z-axis direction is the direction from the upper side to the lower side in the vertical direction.

Note that, as shown in FIG. 1B, the apparatus 14 and the package carrying platform 16 can rotationally move about the axis of the Y-axis. That is, the apparatus 14 and the package carrying platform 16 can be inclined with respect to the floor F as appropriate.

The frame 34 of the apparatus 14 can move in the X-axis direction, the Y-axis direction and the Z-axis direction with respect to the base 32 by the operation of the movement mechanism 24 described later. Thus, the controller 22 can move the position of the placement 36 (conveyors 52, 54 and 56 described later) in the X-axis direction, the Y-axis direction and the Z-axis direction by the operation of the movement mechanism 24.

The placement 36 has the plurality of belt conveyors 52, 54 and 56. The conveyors 52, 54, and 56 are arranged in order along the negative X-axis direction. A belt of the conveyor 52 is wound around a distal side cylindrical shaft (distal portion) 52a and a proximal end side cylindrical shaft (proximal end portion) 52b. A motor (not shown) is arranged, as part of the movement mechanism 24, on at least one of the distal side cylindrical shaft 52a or the proximal end side cylindrical shaft 52b. The motor on at least one of the distal side cylindrical shaft 52a or the proximal end side cylindrical shaft 52b is connected to the controller 22. Thus, the belt of the conveyor 52 is rotated in a state of being appropriately controlled by the motor. Note that the conveyors 54 and 56 are also formed in the same manner as the conveyor 52.

The distal side cylindrical shaft 52a of the furthermost distal side conveyor 52 is formed to have a thickness (outer diameter) in the vertical direction (the Z-axis direction) as thin as possible. Thus, due to the movement of the frame 34 by the movement mechanism 24, part of the distal side cylindrical shaft 52a of the furthermost distal side conveyor 52, particularly the distal side thereof, can enter the gap between the loaded packages B1 and B3.

In the present example, the second camera 38 is arranged on the lower side of the conveyor 52. The viewing field of the camera 38 may be adjusted by the controller 22, for example, by being moved along the ZX plane at the lower side of the placement 36, by using the zoom function thereof, or the like. For example, an RGB-Depth sensor is used as the second camera 38. The second camera 38 is constituted by a color camera and a distance image sensor and has a function of superimposing a distance image on an RGB image. The controller 22 can detect the bottom side of the package B1 and/or the gap between the packages B1 and B3 by image processing in the controller 22 using the image data captured by the second camera 38. The second camera 38 can measure the distance to the package carrying platform 16 and the distance to one or more packages.

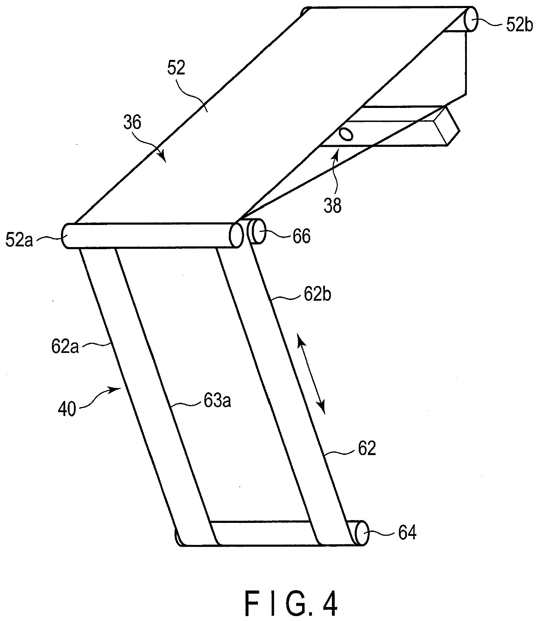

As shown in FIGS. 1A, 1B and 4, the support 40 is provided between the distal side cylindrical shaft 52a of the conveyor 52 and the base 32. The support 40 has, for example, a roll curtain shape and has a sheet-shaped member 62 and a pair of cylinders 64 and 66. For the sheet-shaped member 62, appropriate cloth (fabric) may be used. The pair of cylinders 64 and 66 has central axes parallel to the Y-axis. One cylinder 64 of the pair of cylinders 64 and 66 is fixed to the base 32, and the other cylinder 66 is supported at the distal side cylindrical shaft 52a of the conveyor 52 or in the vicinity thereof. That is, the cylinder 66 at one end of the sheet-shaped member 62 is attached to the placement 36, and the cylinder 64 at the other end is attached to the base (the fixed portion) 32. The sheet-shaped member 62 is wound around both the cylinders 64 and 66. The sheet-shaped member 62 and the cylinders 64 and 66 are formed in the same manner as, for example, a roll curtain. The distance between the pair of cylinders 64 and 66 can be varied from 0 mm where the cylinders 64 and 66 are in contact with each other to a distance that coincides with the length of the sheet-shaped member 62. A torsion spring (not shown) is arranged in at least one of the cylinders 64 or 66. Appropriate tension is constantly generated in the sheet-shaped member 62. Then, when the tension of the sheet-shaped member 62 is reduced and loosened, at least one of the cylinders 64 or 66 can wind up the sheet-shaped member 62.

When the frame 34 moves with respect to the base 32, the area of the sheet-shaped member 62 can be increased or decreased in a state where appropriate tension is applied to the sheet-shaped member 62 between the pair of cylinders 64 and 66. Thus, the size of the sheet-shaped member 62 can change when the cylinder 66 moves with respect to the base 32 according to the position of the distal side cylindrical shaft 52a of the placement 36, that is, the conveyor 52.

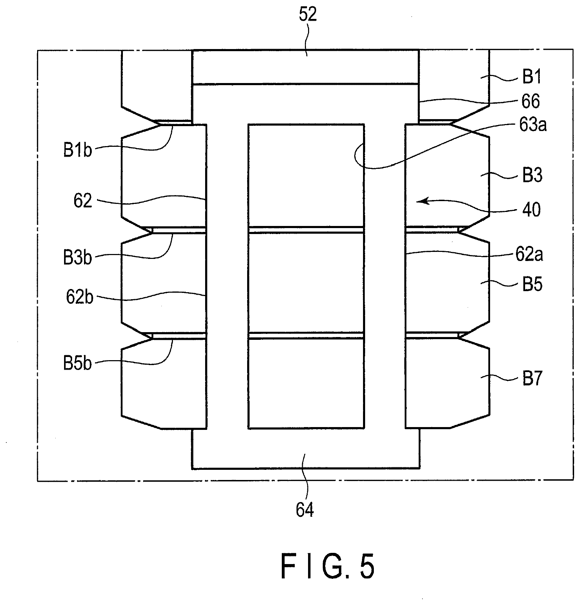

As shown in FIG. 5, the sheet-shaped member 62 has a window 63a such as a slit or an opening. Thus, the second camera 38 can image the packages B1, B3, B5 and B7 through the window 63a of the sheet-shaped member 62. The window 63a is formed between a pair of edges 62a and 62b for suppressing the deformation of the face of the sheet-shaped member 62 itself. Note that the width of the sheet-shaped member 62 in the Y-axis direction can be set as appropriate. Moreover, the width of the window 63a in the Y-axis direction can be set as appropriate.

FIG. 5 shows an image obtained with the second camera 38 by photographing the package carrying platform 16 loaded with the packages B1, B2 and so on. The image displays the bottom face of the conveyor 52 of the placement 36, the sheet-shaped member 62 and the cylinders 64 and 66 of the support 40, and the packages B1, B3, B5 and so on.

Herein, in a case where the first camera 26 disposed at the front of and above the package carrying platform 16 is used, there is a possibility that part of the apparatus 14 interferes between the first camera 26 and the package carrying platform 16. On the other hand, other than the support 40, there are no interfering objects or objects that can interfere between the second camera 38 and the package carrying platform 16. Then, the window 63a of the sheet-shaped member 62 of the support 40 has a predetermined width. Thus, with the image captured by the second camera 38, the controller 22 can easily find the bottom side of one or more packages on the package carrying platform 16.

The controller 22 grasps the positional relationship among the sheet-shaped member 62 and the cylinders 64 and 66 of the support 40, and the second camera 38. The controller 22 can erase or ignore the sheet-shaped member 62 and the cylinders 64 and 66 displayed in FIG. 5 by, for example, algorithm (utilizing line detection, color detection, region detection or the like) of appropriate image processing (the package determinator 22b).

Herein, the material of the sheet-shaped member 62 is suitably formed of an infrared ray absorbing material. In this case, transmission photographing of the sheet-shaped member 62 is impossible by using the second camera 38. That is, among the packages B1, B3, B5 and so on, information on the site present in the positive X-axis direction with respect to the sheet-shaped member 62 cannot be obtained by the second camera (the distance image sensor) 38. Thus, the controller 22 can perform image processing for ignoring the presence of the sheet-shaped member 62, that is, the support 40 in the image information captured by the second camera 38.

The controller 22 focuses on extracting the bottom side of each package after performing such pre-processing on the image information obtained by the second camera 38. To detect the bottom side of each package, the local maximum points, the color changing points and the like in the information from the second camera (the distance image sensor) 38 are used. The controller 22 can ignore the presence of the sheet-shaped member 62 and extract bottom sides B1b, B3b and B5b of the packages B1, B3 and B5 that can be imaged through the window 63a. As shown in FIG. 5, in a case where the outside of the sheet-shaped member 62 can be imaged by the second camera 38, the controller 22 can extract the bottom sides B1b, B3b and B5b of the packages B1, B3 and B5 at the outside of the sheet-shaped member 62.

A large number of sets of package carrying platforms 16, on which a plurality of (a large number of) packages are loaded, may be prepared for the controller 22 to learn, by deep learning, images obtained in the same manner as shown in FIG. 5 so as to make the bottom side of each package easier to be detected. In that case, the images of a large amount of packages are photographed in advance, and, as an example, a human can discriminate the boundaries of the packages in the images and draw lines on the boundaries to make the images as the learning images.

In a case where the packages are supported by the support 40, there is a high possibility that the cylinder 66 on the distal side of the conveyor 52 is at a position in the further positive X-axis direction than the cylinder 64 provided at the base 32. The sheet-shaped member 62 is inclined with respect to the X-axis and the Z-axis. As shown in FIG. 1A, the sheet-shaped member 62 can support the packages B3, B5 and B7 in a state where part of the distal side cylindrical shaft 52a of the furthermost distal side conveyor 52 and/or the cylinder 66 is entered the gap between the packages B1 and B3 loaded. By supporting the packages B3, B5 and B7 with the sheet-shaped member 62, the package collapse of the packages B3, B5 and B7 and the packages B4, B6, B8 and B9 on the back face side thereof is prevented. Moreover, even if the package collapse of the packages B3 and B4 to B9 occurs, the collapsed packages are prevented from entering into the base 32 and the frame 34 of the apparatus 14 through the sheet-shaped member 62.

Note that the sheet-shaped member 62 of the support 40 is suitably not in a state of being parallel to the Z-axis even when the inclination face 12a of the inclination 12 is inclined with respect to the floor F.

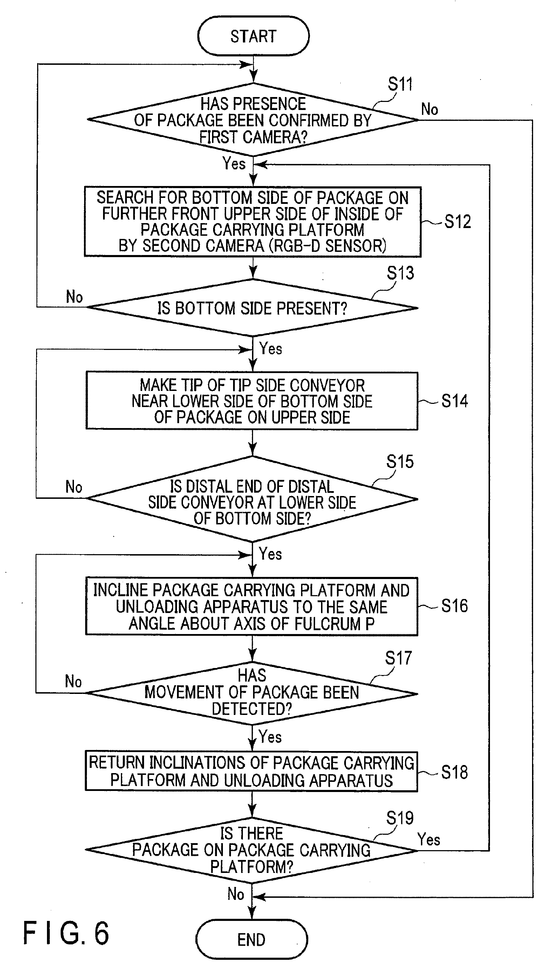

The processing flow of conveying the packages B1 and B2 to B9 by using this package takeout system 10 will be described using FIG. 6.

First, the controller 22 operate the first camera 26, the first camera 26 photographs a bird's-eye view of the package carrying platform 16, and the package determinator (the image processor) 22b of the controller 22 determines the presence of the packages B1 and B2 to B9 on the package carrying platform 16 (Step S11). The controller 22 can use the zoom function of the camera 26 as appropriate when the first camera 26 photographs the bird's-eye view of the package carrying platform 16.

When the controller 22 has determined that there are no packages B1 and B2 to B9 on the package carrying platform 16 (No in Step S11), the processing ends.

When the controller 22 has determined that the packages B1 and B2 to B9 are on the package carrying platform 16 (Yes in Step S11), the controller 22 moves the movement mechanism 24 and moves the frame 34 as appropriate while the second camera 38 on the lower side of the conveyor 52 photographs the inside of the package carrying platform 16 through the window 63a of the sheet-shaped member 62. At this time, depending on the relationship with the width of the sheet-shaped member 62 along the Y-axis direction, the controller 22 operate the first camera 26, and the first camera 26 photographs the packages at the outside of the sheet-shaped member 62. The controller 22 moves the movement mechanism 24 as appropriate to bring the distal side cylindrical shaft 52a of the conveyor 52 close to the package B1 on the further upper side and search for the bottom side B1b of the package B1 on the further front upper side of the inside of the package carrying platform 16 (Step S12). At this time, as the distance between the cylinders 64 and 66 increases, the sheet-shaped member 62 elongates in a state of maintaining appropriate tension.

The controller 22 can extract the bottom sides B1b, B3b and B5b of the packages B1, B3 and B5 through the window 63a of the sheet-shaped member 62 and outside the edges 62a and 62b of the sheet-shaped member 62 (the position on the positive Y-axis direction side with respect to the edge 62a and the position in the negative Y-axis direction with respect to the edge 62b). When the controller 22 has confirmed the presence of the bottom side B1b of the package B1 on the further front upper side of the inside of the package carrying platform 16 (Yes in Step S13), the controller 22 moves the movement mechanism 24. The controller 22 makes the distal side cylindrical shaft 52a of the furthermost distal side conveyor 52 and/or the cylinder 66 near or abut the package B3 under the bottom side B1b of the package B1 of which the presence of the bottom side B1b has been confirmed (Step S14).

In a case where the controller 22 could not have confirmed the presence of the bottom side B1b of the package B1 on the further front upper side of the inside of the package carrying platform 16 (No in Step S13), the controller 22 operate the first camera 26, and the first camera 26 photographs the package carrying platform 16 again, and the controller 22 confirms whether or not the packages B1 to B9 are on the package carrying platform 16 (Step S11). Alternatively, instead of the flow from Step S13 to Step S11, the controller 22 may cause the flow of Step S12 to be performed, in which the frame 34 is moved as appropriate to search for the bottom side B1b of the package B1 on the further front upper side of the inside of the package carrying platform 16 while the second camera 38 photographs the inside of the package carrying platform 16.

When the controller 22 moves the movement mechanism 24, the controller 22 makes, by, for example, feedback control or the like, the distal side cylindrical shaft 52a of the furthermost distal side conveyor 52 and/or the cylinder 66 near the package B3 under the bottom side B1b of the package B1 of which the presence of the bottom side B1b has been confirmed (Step S14). At this time, the sheet-shaped member 62 of the support 40 supports not only the package B3, but also the packages B5 and B7 under the package B3. Thus, the possibility of the package collapse can be greatly reduced as compared with a case where only the package B3 is supported by the support 40.

When the controller 22 has determined that the distal side cylindrical shaft 52a of the furthermost distal side conveyor 52 and/or the cylinder 66 is at a position near the package B3 under the bottom side B1b of the package B1 of which the presence of the bottom side B1b has been confirmed (Yes in Step S15), the controller 22 causes the movement mechanism 24 to operate to incline the inclination 12 as well as to operate all the conveyors 52, 54 and 56. The inclination 12 inclines the package carrying platform 16 and the apparatus 14 to the same angle (Step S16). At this time, the controller 22 may incline the inclination 12 to a predetermined angle, may incline the inclination 12 to a desired angle, or may incline the inclination 12 until the placement of the package B1 (and B2) onto the distal side conveyor 52 or the intermediate conveyor 54 is detected. The inclination angle is an appropriate angle from 0° to 90°. The inclination of the inclination face 12a of the inclination 12 changes the direction of gravity of the package B1 (and B2). Thus, due to the inclination of the inclination face 12a of the inclination 12, the package B1 (and B2) slides with respect to the packages B3 and B4. As for the package B1 (and B2), the package B1 (and B2) is put on the belt conveyor 52 by the gravity and the raking force of the belt conveyor 52 (the force to put the package B1 (and B2) on the conveyor 52). The package B1 (and B2) is transferred from the conveyor 52 being operated to the conveyors 54 and 56 adjacent in the negative X-axis direction. The package B1 (and B2) is moved from the conveyor 56 to an appropriate different process. In this manner, the inclination of the inclination face 12a of the inclination 12 changes the direction of gravity of the package B1 (and B2), and the package B1 (and B2) is placed on the placement 36.

At this time, the packages B3, B5 and B7 are supported by the sheet-shaped member 62 of the support 40. The sheet-shaped member 62 of the support 40 is not inclined to a state of being parallel to the Z-axis. The sheet-shaped member 62 of the support 40 continues to hold the packages B3 to B9 toward the package carrying platform 16. Thus, even if the packages B1 and B2 are put on and conveyed by the conveyors 52, 54 and 56, the occurrence of the package collapse of the remaining packages B3 to B9 can be prevented. That is, the packages B3 and so on other than the package B1 (and B2) that should be removed are held by the support 40, and the package collapse is prevented.

When the controller 22 has detected the movement of the package B1 (and B2) from the package carrying platform 16 to the conveyors 52, 54 and 56 (Yes in Step S17), the controller 22 returns the inclinations of the package carrying platform 16 and the unloading apparatus 14 to the originals as well as stops the operations of the conveyors 52, 54 and 56 (Step S18). At this time, if the controller 22 operates the second camera 38, and detects the remaining of the package on the package carrying platform 16 by the second camera 38, the inclinations of the package carrying platform 16 and the unloading apparatus 14 do not need to be returned to the state shown in FIG. 1A. Returning the apparatus 14 and the package carrying platform 16 to the state shown in FIG. 1A may be after all of the packages are removed from the package carrying platform 16 and moved to a different process.

The controller 22 confirms whether there is a package on the package carrying platform 16 by using, for example, the first camera 26 (Step S19). In a case where the controller 22 has determined the absence of the package (No in Step S19), the processing ends.

In a case where the controller 22 has determined the presence of the packages B3 to B9 (Yes in Step S19), the processing returns to Step S12 and continues the following steps again. Then, the controller 22 can find the gap between the packages B3 and B5 and the gap between the packages B5 and B7 one after another and take out the packages from the package carrying platform 16.

Note that the second camera 38 can continue to confirm the states of the packages B3, B5 and B7 through the window 63a of the sheet-shaped member 62 continuously from before the package B1 is removed until after the package B1 is removed. Thus, suppose a case where the packages B3 and B4 are removed next, the package collapse of the packages B5 to B9 is prevented if the packages B5 and B7 can be securely supported by the sheet-shaped member 62 of the support 40.

In this manner, in the apparatus 14, even with the package carrying platform 16 loaded with the packages B1 to B9 in a disorganized manner, the bottom sides of the packages B3, B5 and B7 can be easily found by using the camera 38 on the lower side of the conveyor 52 while the packages B3, B5 and B7 are supported by using the sheet-shaped member 62 having the window 63a. Thus, the distal side cylindrical shaft 52a of the conveyor 52 and/or the cylinder 66 can be inserted one after another to the positions slightly under the bottom sides B1b and B3b of the packages B1, B3 and so on. Thus, even in a case where the package B1 is removed from the package carrying platform 16 in which the packages B1 and so on are disposed in a disorganized manner while the packages B3 and so on are supported by the support 40, the package collapse of the packages B3 and so on can be prevented by the system 10 according to the present example. Thus, by using the system 10 including this apparatus 14, it is possible to improve the speed of the automatic unloading work from a certain package carrying platform 16 loaded with packages. Therefore, according to the apparatus 14 of the present example, an unloading apparatus, which can recognize in an earlier stage one or more packages removed next while preventing load collapse in a case of repeating work of removing one or more packages from a package carrying platform where packages with various shapes, such as a box shape and a bag shape, are present, can be provided.

As described above, the unloading apparatus 14 according to the present example has the placement 36 (the conveyors 52, 54 and 56), the movement mechanism 24 (the inclination 12), the camera (the second camera) 38, and the support 40 (the sheet-shaped member 62). The placement 36 directs to the package carrying platform 16 on which one or more packages B1, B2 and so on are loaded, and the one or more packages B1, B2 and so on are placed thereon when the packages are removed from the package carrying platform 16. The movement mechanism 24 moves the one or more packages B1, B2 and so on toward the placement 36. The camera 38 is attached to the lower side of the placement 36 in a state the placement 36 directs to the package carrying platform 16 and can detect the bottom side B1b of the one or more packages B1, B2 and so on. When the one or more packages B1, B2 and so on are removed from the package carrying platform 16 and placed on the placement 36, the support 40 supports the package B3 adjacent to, preferably right under the bottom side B1b of the one or more packages B1, B2 and so on detected by the camera 38.

Since the second camera 38 can be attached to the lower side of the placement 36, the position of the second camera 38 can be made closer to the packages B1, B2 and so on as appropriate compared with the first camera 26. Thus, the second camera 38 attached to the lower side of the placement 36 makes it easier to detect the bottom side B1b of the package B1 removed from the package carrying platform 16 than a case where the first camera 26 is used. Then, the package B1 can be removed in a state where the package collapse of the packages B3 and so on under the package B1 is prevented by the support 40. Then, although part is interfered with the support 40 when the packages B1 and B2 are removed, the camera 38 can continue to constantly image the packages B3, B5 and so on, on the package carrying platform 16 while suppressing, by the successive image processing, the influence of the interference. That is, by performing the image processing with the controller 22 in accordance with the sheet-shaped member 62, the bottom sides B3b, B5b and so on of the packages B3, B5 and so on can be extracted from the images from the camera 38. Thus, the operation of removing the next packages B3 and so on can be immediately performed.

Note that, in the present example, the description has been made where the inclination 12 has the inclination face 12a, and the inclination face 12a rotationally moves about the axis of the fulcrum P. The unloading apparatus 14 and the package carrying platform 16 may be inclined to an appropriate inclination by, for example, disposing a hydraulic apparatus or the like on the floor F.

Herein, the first camera 26 was used to photograph the packages B1, B2 and so on inside the package carrying platform 16, and the controller 22 determined the presence of the packages B1, B2 and so on inside the package carrying platform 16 based on these data. However, if it is possible to confirm the presence of the packages B1, B2 and so on by the second camera 38 through the support 40, the first camera 26 is not necessarily required. In this case, the second camera 38 may find the packages B1, B3 and so on when being moved together with the conveyor 52 from the upper side to the lower side of the package carrying platform 16 in a state of facing the package carrying platform 16, or may find the packages B1, B3 and so on when being moved together with the conveyor 52 from the lower side to the upper side of the package carrying platform 16.

The first example can provide an unloading apparatus that can recognize in an earlier stage a package removed next and a method of detecting a package adjacent to the package while preventing package collapse in a case of repeating work of removing a package from a package carrying platform where packages with various shapes, such as a box shape and a bag shape, are present.

### (FIRST MODIFICATION EXAMPLE)

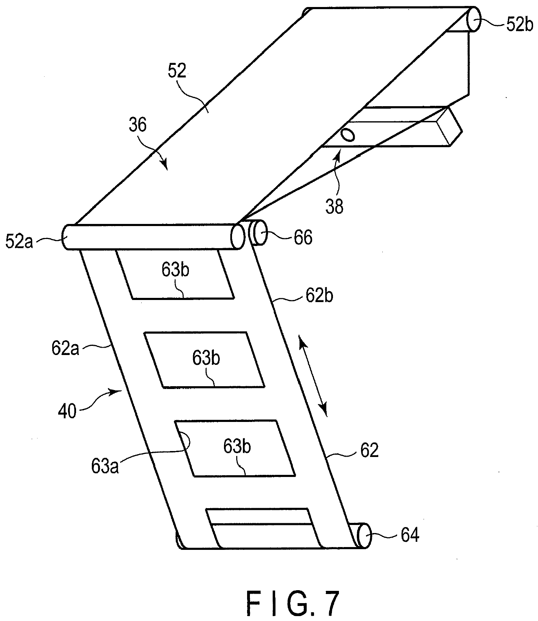

A first modification example will be described using FIG. 7.

As shown in FIG. 7, a sheet-shaped member 62 of a support 40 has a plurality of netted portions 63b at a window 63a. The netted portions 63b are formed, for example, in parallel along the Y-axis. The netted portions 63b are suitably formed at appropriate intervals. In this case, the sheet-shaped member 62 including the netted portions 63b can easily avoid interference as much as possible due to image processing of a controller 22. The netted portions 63b of the support 40 are provided to be able to securely support packages B3, B5 and so on. Note that the netted portions 63b also have a function as reinforcement for the sheet-shaped member 62.

Even if the sheet-shaped member 62 is formed in this manner, in the same manner as described in the first example, the controller 22 can extract as appropriate bottom sides B1b, B3b and B5b of packages B1, B3 and B5, which can be imaged through the window 63a and, further, outside the sheet-shaped member 62, while ignoring the presence of the sheet-shaped member 62 and avoiding the sites where the netted portions 63b are present.

Thus, even in a case of using the support 40 having the structure of the present modification example, in the same manner as described in the first example, the packages B1, B2 and so on loaded on a package carrying platform 16 can be sequentially placed on a placement 36 and moved to a different process.

There is a concern that the packages B1, B3, B5 and so on cannot be imaged by the camera 38 due to the netted portions 63b of the sheet-shaped member 62. In a case where the sheet-shaped member 62 is formed with the netted portions 63b, the controller 22 can easily extract the bottom side B1b of the targeted package B1 by performing image processing in consideration of the possession of the netted portions 63b. The controller 22 can also extract the bottom sides B3b and B5b of the packages B3, B5 and under the bottom side B1b of the package B1 in the same manner as the bottom side B1b of the package B1.

### (SECOND MODIFICATION EXAMPLE)

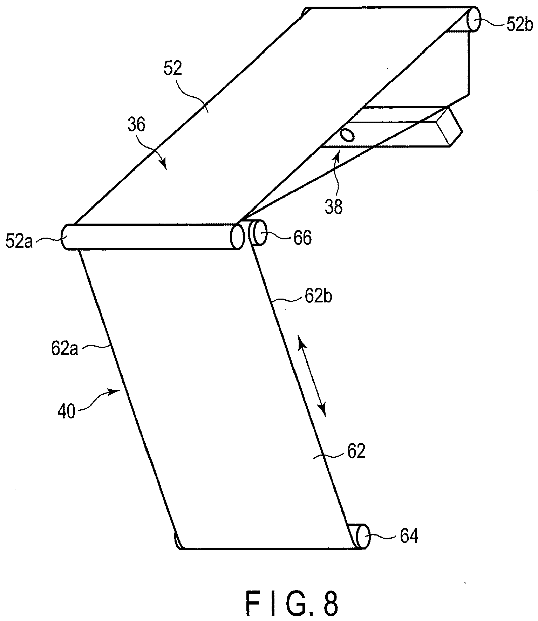

A second modification example will be described using FIG. 8.

A sheet-shaped member 62 of a support 40 shown in FIG. 8 is different from the first example shown in FIG. 4 and the first modification example shown in FIG. 7 in that a window 63a is not formed. The sheet-shaped member 62 of the present modification example is suitably formed of a transparent or translucent infrared ray transmitting material. In addition, the sheet-shaped member 62 of the present modification example may be formed in an appropriate mesh shape. In this case, image information captured by the second camera 38 can be obtained by imaging packages B1, B3 and so on to the same extent as where the sheet-shaped member 62 is not present. Thus, in a case of using the sheet-shaped member 62 of the present modification example, the controller 22 can easily extract bottom sides B1b, B3b and so on.

Thus, even in a case of using the support 40 having the structure of the present modification example, in the same manner as described in the first example and the first modification example, the packages B1, B2 and so on loaded on a package carrying platform 16 can be sequentially placed on a placement 36 and moved to a different process.

### (SECOND EXAMPLE)

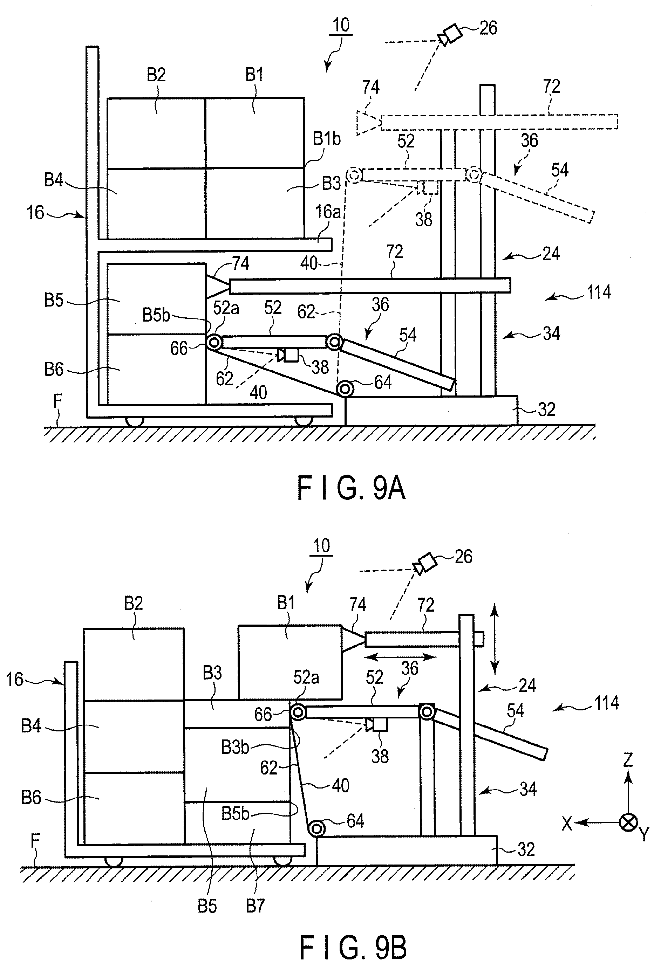

A second example will be described using FIGS. 9A to 12B. The present example is a modification example of the first example including each modification example.

An objective according to the second example is to provide an unloading apparatus that can recognize in an earlier stage a package removed next and a method of detecting a package adjacent to the package while preventing package collapse in a case of repeating work of removing a package from a package carrying platform where packages with various shapes, such as a box shape and a bag shape, are present.

According to the second example, an unloading apparatus includes a placement, a movement mechanism, a camera and a support. The placement directs to a package carrying platform loaded with a package and on which the package is placed when the package is taken out from the package carrying platform. The movement mechanism is configured to move the package toward the placement. The camera is attached to a lower side of the placement and directs to the package carrying platform. The camera is configured to detect a bottom side of the package. The support enables the camera to detect the bottom side of the package while supporting an adjacent package to a lower side of the bottom side of the package when the package is taken out from the package carrying platform and placed on the placement.

As shown in FIG. 9A, there is a package carrying platform 16 having a shelf 16a. In a case of taking out packages under the shelf 16a from the package carrying platform 16 in such a package carrying platform 16, a human performs work of pulling out the packages by putting its hands under the shelf 16a. Thus, in a case of constructing a package takeout system 10 that takes out the packages from the package carrying platform 16 in which the shelf 16a is present, it is necessary to devise to remove the packages under the shelf 16a not from the upper side but in the horizontal direction.

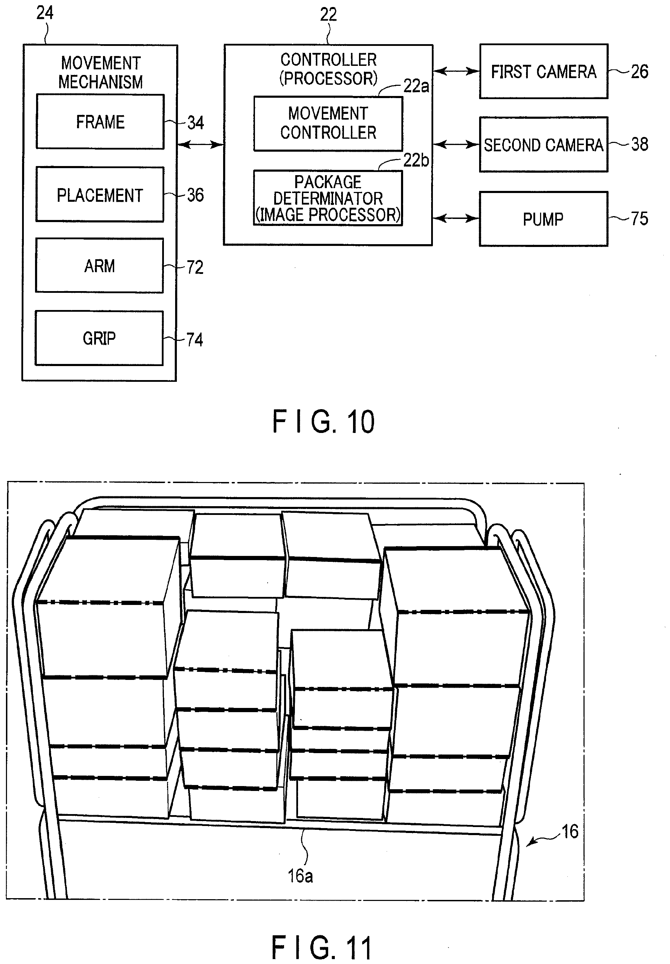

Herein, an example will be described in which an arm 72 and a grip (a robot hand) 74 controlled and operated by a controller 22 are used as shown in FIG. 10, instead of inclining the inclination face 12a of the inclination 12 to move the packages B1 and B2 to the placement 36 by the gravity as described in the first example. The grip 74 suitably has a plurality (a large number) of suction cups.

The grip 74 normally takes out the packages one by one from the package carrying platform 16. In a case where the upper side package B1 adjacent to the lower side package B3 is stably disposed, or the like, there may be a case where the grip 74 can take out the upper side package B1 together when removing the lower side package B3. Thus, the grip 74 can grip one or more packages.

A suction pump 75 is connected to the controller 22. The controller 22 can switch ON/OFF of the pump 75. The pump 75 is connected to the grip 74. Thus, the controller 22 can switch between the operations of causing the grip 74 to exert the suction force (grasping force) on the packages and of separating the grip 74 from the packages. In the present example, an example will be described in which the grip 74 that sticks fast to and grasps the front face of a package is used, which is considered to be highly versatile.

Note that there is a case where each package is disposed to an appropriate angle with respect to the YZ plane like faces Sa and Sb of the package B1 shown in FIG. 2A. The grip 74 sticks fast to one of the faces Sa or Sb so that the stuck fast face becomes parallel or substantially parallel to the YZ plane. Thus, the package B1 may be loaded in a disorganized manner.

As shown in FIGS. 9A and 9B, the package takeout system 10 has an unloading apparatus 114 and the package carrying platform 16. FIG. 9A shows the package takeout system 10 used for the package carrying platform 16 having the shelf 16a. FIG. 9B shows a state where this package takeout system 10 is used for the package carrying platform 16 without the shelf 16a. The unloading apparatus 114 according to the present example can be used for both the package carrying platform 16 having the shelf 16a and the package carrying platform 16 not having the shelf 16a.

The unloading apparatus 114 according to the present example has a placement 36 (conveyors 52 and 54), a movement mechanism 24 (the arm 72 and the grip 74), a camera (a second camera) 38, and a support 40 (a sheet-shaped member 62). The placement 36 directs to the package carrying platform 16 on which one or more packages B1, B2 and so on are loaded, and the one or more packages B1, B2 and so on are placed thereon when the packages are removed from the package carrying platform 16. The movement mechanism 24 moves the one or more packages B1, B2 and so on toward the placement 36. The camera 38 is attached to the lower side of the placement 36 in a state the placement 36 directs to the package carrying platform 16 and can detect the bottom side B1b of the one or more packages B1, B2 and so on. When the one or more packages B1, B2 and so on are removed from the package carrying platform 16 and placed on the placement 36, the support 40 supports the package B3 adjacent to, preferably right under the bottom side B1b of the one or more packages B1, B2 and so on detected by the camera 38.

In the present example, not only the controller 22 and the movement mechanism 24 but also a first camera 26 can be used as part of the apparatus 114. That is, the apparatus 114 can include the controller 22, the movement mechanism 24 and the first camera 26.

The unloading apparatus 114 according to the present example has a base (a fixed portion) 32, a frame 34 fixed to the base 32, the placement 36 provided in the frame 34 and on which the one or more packages B1 and B2 are put, the second camera (an RGB-Depth sensor) 38, and the support 40 that supports the packages B3 and so on under the one or more packages B1 and B2. The apparatus 114 further has the arm 72 that moves with respect to the frame 34, the grip 74 that is provided at the distal end of the arm 72 and grasps the packages B1, B2 and so on, and the first camera 26. Herein, an example will be described in which the packages B1, B2 and so on are stuck fast one by one and grasped.

FIG. 11 shows an oblique overlooking image obtained by photographing, by the first camera 26, the packages loaded on the package carrying platform 16. The image shown in FIG. 11 shows a state where box-shaped packages are organized. The controller 22 extracts three visible sides from the image information if the package that should be taken out has a box shape.

In FIG. 11, the boundary lines between the packages in the front row and the packages in the rear row in the image are extracted by image processing. If there is a package in an intermediate row between the packages in the from row and the packages in the rear row, the boundary thereof is also extracted.

The grip 74 in the present example is particularly suitable for a box-shaped such as substantially rectangular parallelepiped package as shown in FIG. 11. The grip 74 described in the present example can also be used for the packages with appropriate shapes shown in FIG. 2A.

The package takeout system 10 has the controller (processor) 22, the movement mechanism 24 controlled by the controller 22, and the first camera 26. Herein, as shown in FIGS. 9A and 9B, a description will be given of a case where the number of first cameras 26 is one at a position front of and above the package carrying platform 16. Note that the number of first cameras 26 may be plural such as two, one above the package carrying platform 16 and one at the front of the package carrying platform 16. In this case, a plurality of images are synthesized by image processing, and the boundaries (bold solid lines) between the front row and the rear row, the uppermost sides (bold alternate long and short dash lines) of the front row, the bottom sides (bold dashed lines) and the like can be extracted as shown in FIG. 11.

The controller 22 has, for example, a movement controller 22a that controls the movement mechanism 24, the arm 72 and the grip 74, and a package determinator (an image processor) 22b that performs image processing on images from both the first camera (an RGB sensor) 26 and the second camera (an RGB-Depth sensor) 38. The movement controller 22a controls the movement mechanism 24, the arm 72 and the grip 74 to operate as appropriate according to the image processing results in the package determinator (the image processor) 22b.

The movement mechanism 24 can move the conveyors 52 and 54 along the Z-axis direction with respect to the base 32 as well as can move along the X-axis direction. The arm 72 and the grip 74 can move along the Z-axis direction with respect to the base 32 and the frame 34 as well as can move along the X-axis direction.

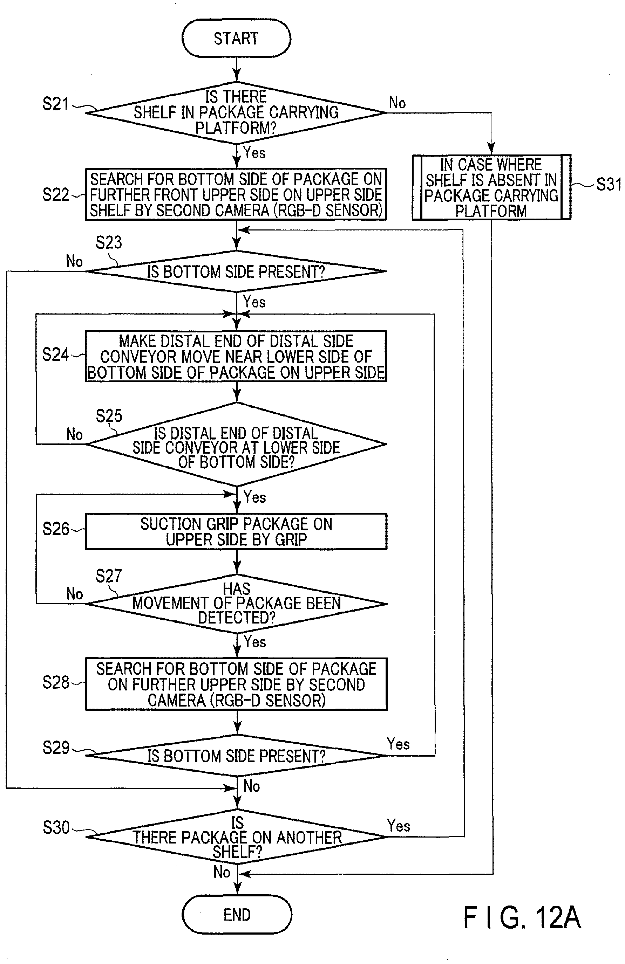

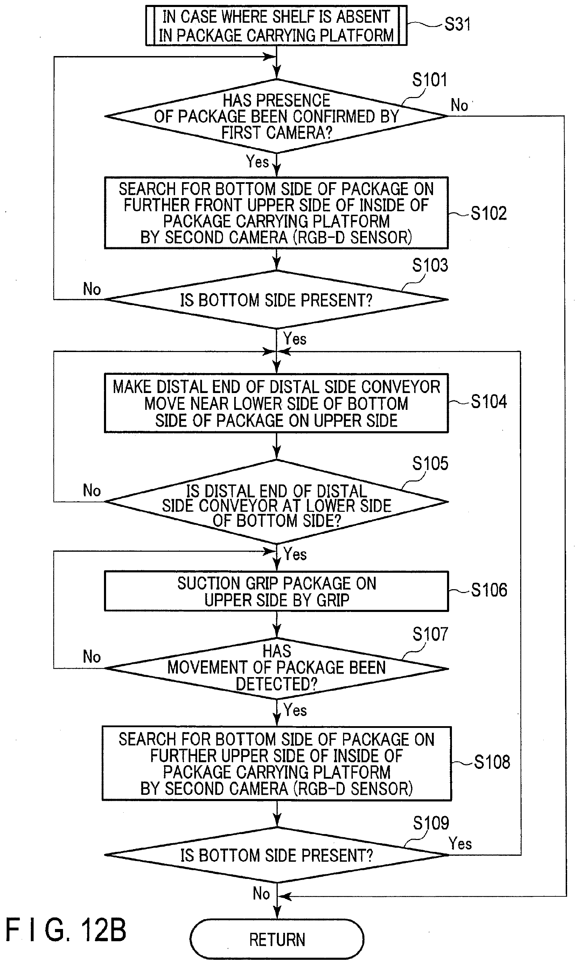

The processing flow of conveying the packages B1 and B2 to B7 in a case where there is no shelf in the package carrying platform 16 (see FIG. 9B), and the processing flow of conveying the packages B1 and B2 to B6 in a case where the shelf 16a is in the package carrying platform 16 (see FIG. 9A), both using the package takeout system 10, will be described using FIGS. 12A and 12B. Herein, both a case where packages put above and under the intermediate shelf 16a of the package carrying platform 16 are removed (see FIG. 9A) and a case where packages are removed from the package carrying platform 16 where the intermediate shelf 16a is not present (see FIG. 9B), both using the apparatus 114, will be described.

The controller 22 detects the presence or absence of the shelf 16a in the package carrying platform 16 (Step S21). Herein, the controller 22 determines the presence or absence of the shelf 16a, for example, from the overlooking image photographed by the first camera 26 or the like, information transmitted to the controller 22 from the package carrying platform 16, information acquired by the controller 22 from the package carrying platform 16, and the like.

A description will be given of the flow in a case where the shelf 16a is absent in the package carrying platform 16 as shown in FIG. 9B (No in Step S21). In a case where the shelf 16a is not in the package carrying platform 16, the packages B1 and B2 to B7 loaded on the package carrying platform 16 are sequentially conveyed in accordance with the flow shown in FIG. 12B.

The controller 22 operates the first camera 26, the first camera 26 photographs the package carrying platform 16, and the package determinator (the image processor) 22b of the controller 22 determines the presence of the packages B1 and B2 to B7 on the package carrying platform 16 (Step S101).

When the controller 22 has determined that the packages B1 and B2 to B7 are not on the package carrying platform 16 (No in Step S101), the processing ends (see FIG. 12A).

When the controller 22 has determined that the packages B1 and B2 to B7 are on the package carrying platform 16 (Yes in Step S101), the controller 22 causes the movement mechanism 24 to operate as appropriate while the second camera 38 photographs the inside of the package carrying platform 16. Then, the second camera 38 photographs and searches the bottom side B1b of the package B1 on the further front upper side of the inside of the package carrying platform 16 (Step S102).

When the controller 22 has confirmed the presence of the bottom side B1b of the package B1 on the further front upper side of the inside of the package carrying platform 16 (Yes in Step S103), the controller 22 moves the movement mechanism 24 to make a distal side cylindrical shaft 52a of the furthermost distal side conveyor 52 and/or a cylinder 66 near or abut the package B3 under the package B1 of which the presence of the bottom side B1b has been confirmed (Step S104).

In a case where the controller 22 could not have confirmed the presence of the bottom side B1b of the package B1 on the further front upper side of the inside of the package carrying platform 16 (No in Step S103), the first camera 26 photographs the package carrying platform 16 again, and the controller 22 confirms whether or not the packages B1 to B7 are on the package carrying platform 16 (Step S101). Alternatively, instead of Step S101, the controller 22 may move the frame 34 as appropriate to search for the bottom side B1b of the package B1 on the further front upper side of the inside of the package carrying platform 16 while the second camera 38 photographs the inside of the package carrying platform 16 (Step S102).

When the controller 22 moves the movement mechanism 24, the controller 22 makes, by, for example, feedback control or the like, the distal side cylindrical shaft 52a of the furthermost distal side conveyor 52 and/or the cylinder 66 near the package B3 under the bottom side B1b of the package B1 of which the presence of the bottom side B1b has been confirmed (Step S104).

At this time, the packages B3, B5 and B7 placed on the package carrying platform 16 are supported by the sheet-shaped member 62 of the support 40. The sheet-shaped member 62 of the support 40 continues to hold the packages B2 to B7 toward the package carrying platform 16. Even if the package B1 is put on and conveyed by the conveyors 52 and 54, the apparatus 114 can prevent the occurrence of the package collapse of the remaining packages B2 to B7 by the sheet-shaped member 62 of the support 40. That is, the packages B2 to B7 other than the package B1 that should be removed are held by the support 40 to prevent the package collapse.

When the controller 22 has determined that the distal side cylindrical shaft 52a of the furthermost distal side conveyor 52 and/or the cylinder 66 is at a position near the package B3 under the bottom side B1b of the package B1 of which the presence of the bottom side B1b has been confirmed (Yes in Step S105), the controller 22 causes all of the arm 72, the grip 74 and the conveyors 52 and 54 to operate by the movement mechanism 24. The controller 22 causes the pump 75 to operate so that the grip 74 sticks fast to and grasps the front face of the package B1 (Step S106). The controller 22 moves the arm 72 in the negative X-axis direction in a state where the package B1 is stuck fast to the grip 74. As the package B1 is placed on the conveyor 52 by the raking force of the belt conveyor 52, the controller 22 stops the operation of the pump 75 and separates the grip 74 from the front face of the package B1. The package B1 is transferred from the conveyor 52 to the conveyor 54.

When the controller 22 has detected the movement of the package B1 from the package carrying platform 16 to the conveyor 54 and, further, the movement of the package B1 to a predetermined position (discharging from the apparatus 114 to the outside) (Yes in Step S107), the controller 22 stops the operations of the conveyor 52 and 54 as well as searches for the bottom side B2b of the package B2 on the further upper side of the inside of the package carrying platform 16 by the second camera 38 (Step S108). Note that the timing of searching for the bottom side B2b of the package B2 on the further upper side of the inside of the package carrying platform 16 by the second camera 38 suitably starts at the time point at which the package B1 is transferred to the conveyor 52. Thus, before the determination in Step S107, the bottom side B2b of the package B2 on the further upper side of the inside of the package carrying platform 16 may be searched by the second camera 38.

In a case where the controller 22 has determined that the bottom side B2b of the package B2 or the bottom side B3b of the package B3 is not present (No in Step S109), it is determined that a package is not present on the package carrying platform 16, and the processing ends.

In a case where the controller 22 has determined that the bottom side B2b of the package B2 or the bottom side B3b of the parcel B3 is present on the package carrying platform 16 (Yes in Step S109), the processing returns to Step S104 to continues the following steps again. Then, for example, the controller 22 performs control to stick fast to the package B3 and put the same on the conveyor 52 while the packages B5 and B7 are held by the support 40, or to stick fast to the package B2 and put the same on the conveyor 52 while the package B3 is held by the support 40. In this way, the system 10 can remove the packages B1 to B7 from the package carrying platform 16 in appropriate order.

Noted that Step S101 of confirming the presence of packages on the package carrying platform 16 by the first camera 26 is not necessarily required. This is because the presence of packages on the package carrying platform 16 may be confirmed by the second camera 38.

A description will be given of the flow in a case where the shelf 16a is present in the package carrying platform 16 as shown in FIG. 9A (Yes in Step S21). In a case where the shelf 16a is present in the package carrying platform 16, the packages B1 and B2 to B6 loaded on the package carrying platform 16 are sequentially conveyed, for example, in accordance with the flow shown in FIG. 12A.

As shown in FIG. 9A, there may be a case where the package carrying platform 16 has the shelf 16a parallel to the XY plane at an appropriate position in the Z-axis direction (Yes in Step S21).

While the controller 22 operates the second camera 38, and the second camera 38 photographs the inside of the package carrying platform 16, the controller 22 moves the frame 34 as appropriate to search for the bottom side B1b of the package B1 on the further front upper side among the packages B1, B2 and so on, on the upper side of the uppermost side shelf 16a (Step S22).

When the controller 22 has confirmed the presence of the bottom side B1b of the package B1 on the further front upper side of the inside of the package carrying platform 16 (Yes in Step S23), the controller 22 moves the movement mechanism 24 to make the distal side cylindrical shaft 52a of the furthermost distal side conveyor 52 and/or the cylinder 66 near or abut the package B3 under the package B1 of which the presence of the bottom side B1b has been confirmed (Step S24).

When the controller 22 has determined that the distal side cylindrical shaft 52a of the furthermost distal side conveyor 52 and/or the cylinder 66 is at a position near the package B3 under the bottom side B1b of the package B1 of which the presence of the bottom side B1b has been confirmed (Yes in Step S25), the controller 22 causes all of the arm 72, the grip 74 and the conveyors 52 and 54 to operate by the movement mechanism 24. The controller 22 causes the pump 75 to operate so that the grip 74 sticks fast to and grasps the front face of the package B1 (Step S26). The controller 22 moves the arm 72 in the negative X-axis direction in a state where the package B1 is stuck fast to the grip 74. As the package B1 is placed on the conveyor 52 by the raking force of the belt conveyor 52, the controller 22 stops the operation of the pump 75 and separates the grip 74 from the front face of the package B1. The package B1 is transferred from the conveyor 52 to the conveyor 54.

When the controller 22 has detected the movement of the package B1 from the package carrying platform 16 to the conveyor 54 and, further, the movement of the package B1 to a predetermined position (discharging from the apparatus 114 to the outside) (Yes in Step S27), the controller 22 stops the operations of the conveyor 52 and 54 as well as searches for the bottom side B2b of the package B2 on the further upper side of the inside of the package carrying platform 16 by the second camera 38 (Step S28). Note that the timing of searching for the bottom side B2b of the package B2 on the further upper side of the inside of the package carrying platform 16 by the second camera 38 suitably starts at the time point at which the package B1 is transferred to the conveyor 52. Thus, before the determination in Step S27, the bottom side B2b of the package B2 on the further upper side of the inside of the package carrying platform 16 may be searched by the second camera 38.

In a case where the controller 22 has determined that the bottom side B2b of the package B2 or the bottom side B3b of the package B3 are not present on the upper side of the shelf 16a of the package carrying platform 16 (No in Step S29), it is determined that a package is not present on the upper side of that shelf. Then, the controller 22 searches for the presence of a package on another shelf (herein, under the shelf 16a) (Step S30). In Step S30, the same processing as Step S22 is performed.

When the controller 22 has determined that there is a package on another shelf (under the shelf 16a), the processing returns to Step S23 and the following steps are performed. Thus, the packages B5 and B6 under the shelf 16a are removed onto the conveyors 52 and 54 of the placement 36 by using the grip 74 in the same manner as previously mentioned. Thus, then, in a case where there is still another shelf, the presence of a package is confirmed (Step S30) .

Note that, in a case where the controller 22 could not have confirmed the presence of the bottom side B1b of the package B1 on the further front upper side of the inside of the package carrying platform 16 (No in Step S23), the processing proceeds to Step S30, and the presence or absence of a package on another shelf (under the shelf 16a) is confirmed. In a case where it has been determined that there is no load on another shelf (under the shelf 16a), the controller 22 ends the processing.

In this manner, in the apparatus 114, even with the package carrying platform 16 loaded with the packages B1, B2 and so on, the bottom sides B3b, B5b and B7b of the packages B3, B5 and B7 can be easily found by using the camera 38 on the lower side of the conveyor 52 while the packages B3, B5 and B7 are supported by using the sheet-shaped member 62 having a window 63a. Thus, the distal side cylindrical shaft 52a of the conveyor 52 and/or the cylinder 66 can be disposed one after another to the positions slightly under the bottom sides B1b and B3b of the packages B1, B3 and so on. Thus, by using the system 10 including this apparatus 114, it is possible to improve the speed of the automatic unloading work from a certain package carrying platform 16 loaded with packages.

By using the system 10 according to the present example, immediately after the packages B1 to B4 placed above the shelf 16a of the package carrying platform 16 are removed, the packages B5 and B6 placed under the shelf 16a of the package carrying platform 16 can be removed. In a case where the packages B5 and B6 placed under the shelf 16a of the package carrying platform 16, there may be a case where the first camera 26 cannot take a photograph of the packages B5 and B6. Even in this case, it is possible to confirm the presence of the packages B5 and B6 and, further, the bottom sides B5b and B6b of the packages B5 and B6 by the second camera 38.

Thus, in the same manner as described in the first example, the camera 38 attached under the conveyor 52 may be used to detect the gap (the bottom side B1b of the package B1) between the upper and lower packages B1 and B3 inside the package carrying platform 16. In this case, it is easy to detect, by the camera 38, the bottom side B1b of the package B1 removed from the package carrying platform 16. Then, the package B1 can be removed by the movement mechanism 24 in a state where the package collapse of the packages B3 and so on under the package B1 is prevented by the support 40. Then, the camera 38 can continue to image the packages B3 and so on, on the package carrying platform 16 constantly even when the packages B1 and B2 are removed. Thus, the operation of removing the next packages B3 and so on can be immediately performed. Therefore, according to the present example, the unloading apparatus 114, which can recognize in an earlier stage one or more packages removed next while preventing package collapse in a case of repeating work of removing one or more packages from a package carrying platform where packages with various shapes, such as a box shape and a bag shape, are present, can be provided.

### (MODIFICATION EXAMPLE)

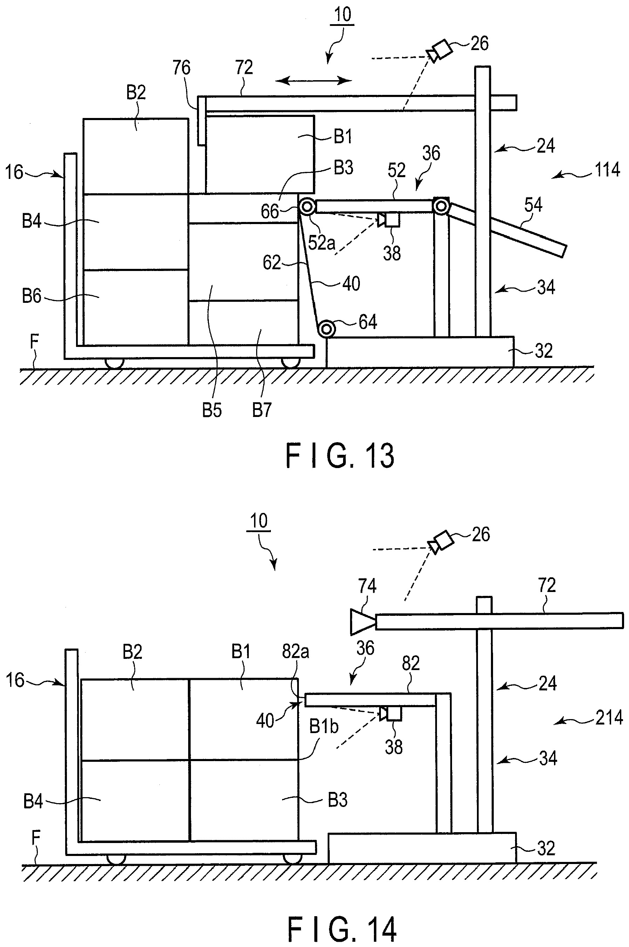

A method of grasping packages B1 and so on may be a method of grasping the back faces of the packages B1 and so on as shown in FIG. 13.

In the present modification example, instead of a grip 74 that sticks fast to and grasps the package B1, a grip 76 that grasps the package B1 by grasping the back face of the package B1 is used. This grip 76 can grasp (draw) not only one package B1 but also a plurality of packages B1 and B2 with respect to packages B3 and B4 simultaneously in a removal direction in the negative X-axis direction from a package carrying platform 16.

For example, a case where the grip (a rake-shaped raking hand) 76 of the method of grasping the back face of the package B1 is used as shown in FIG. 13, there is a possibility that the grip 76 does not enter the gap between the uppermost face of the package under a shelf 16a a and the lower face of the shelf 16a due to the presence of the shelf 16a shown in FIG. 9A. Thus, the method of using the grip 74 to stick fast to and grasp the front faces of the packages B1 and B5 is more versatile than the method of using the grip 76 to grasp the back faces of the packages B1 and B5.

Meanwhile, there may be a case where the grip (the raked-shaped raking hand) 76 can take out not only one package but a plurality of packages together in the negative X-axis direction from the package carrying platform 16. That is, the grip 76 can easily grasp one or more packages. Thus, there may be case where the use of the grip 76 instead of the grip 74 is suitable for an apparatus 114 depending on the presence or absence of the shelf 16a, the shapes of packages, and the like.

Sticking fast to and grasping the front face of the package B1 have been described in the examples shown in FIGS. 9A and 9B, and grasping the back face of the package B1 has been described in the example shown in FIG. 13. In addition, although not shown, it is also possible to grasp the upper face of the package B1 by friction or grasp the same by sticking fast. Depending on the weight of the package, the material of the exterior, or the like, the upper face of the package B2 on the back face side of the package B1 may be grasped by friction or by sticking fast to place the package B2 on a placement 36 together with the package B1 on the front side thereof.

As described above, in the case where a package is pulled out from the package carrying platform 16 by using the grip, sticking fast, grasping (frictional grasping), raking or the like is used. Specifically, in a case of a package having a large flat front face, such as a cardboard box, it is effective to use the grip 74 that sticks fast to the front face thereof and pulls out the package. In a case of a package without faces or with few flat faces, for example, a paper bag, a grip of a method of grasping the package with two large fingers, or the grip 76, like a rake, of the method of raking the package is used.

### (THIRD EXAMPLE)

A third example will be described using FIGS. 14 to 17.

An objective according to the third example is to provide an unloading apparatus that can recognize in an earlier stage a package removed next and a method of detecting a package adjacent to the package while preventing package collapse in a case of repeating work of removing a package from a package carrying platform where packages with various shapes, such as a box shape and a bag shape, are present.

According to the third example, an unloading apparatus includes a placement, a support, a camera, and a controller. A package taken out from a package carrying platform is placed on the placement. The support is configured to support an adjacent package to a lower side of a bottom side of the package. The camera is provided on a lower side of the placement and images the package on the package carrying platform from the lower side of the placement. The controller is configured to control the placement and the camera, detect the bottom side of the package based on information captured by the camera, dispose the placement and a distal end of the support at the adjacent package to the lower side of the bottom side of the package, and place the package on the placement in a state where the adjacent package is supported by the support.

A structure different from the second example will be briefly described. A placement 36 has a lower support 82 instead of a conveyor 52. The lower support 82 is disposed under a grip 74, and a package grasped by the grip 74 is placed thereon. A support 40 has a distal end 82a of the lower support 82 instead of a sheet-shaped member 62. In a case of grasping a package, sticking fast, grasping (frictional grasping), raking or the like can be used as appropriate. In the present example, an example will be described in which the grip 74 that sticks fast to and grasps a package is used as an example.

As shown in FIG. 14, a package takeout system 10 has an unloading apparatus 214 and a package carrying platform 16. The unloading apparatus 214 according to the present example has the placement 36 (the lower support 82), a movement mechanism 24 (an arm 72 and the grip 74), a camera (a second camera) 38, and the support 40 (the distal end 82a of the lower support 82). The placement 36 directs to the package carrying platform 16 on which one or more packages B1, B2 and so on are loaded, and the one or more packages B1, B2 and so on are placed thereon when the packages are removed from the package carrying platform 16. The movement mechanism 24 moves the one or more packages B1, B2 and so on toward the placement 36. The camera 38 is attached to the lower side of the placement 36 in a state the placement 36 directs to the package carrying platform 16 and can detect the bottom side B1b of the one or more packages B1, B2 and so on. When the one or more packages B1, B2 and so on are removed from the package carrying platform 16 and placed on the placement 36, the support 40 supports the package B3 adjacent to, preferably right under the bottom side B1b of the one or more packages B1, B2 and so on detected by the camera 38.

In the present example, not only a controller 22 and the movement mechanism 24 but also a first camera 26 can be used as part of the apparatus 214. That is, the apparatus 214 can include the controller 22, the movement mechanism 24 and the first camera 26.

The lower support 82 according to the present example is a very effective mechanism to pull out a package. In a case where the first camera 26 photographs a package, the lower support 82 is present between the first camera 26 and the package. Thus, there is a possibility that it may become difficult to recognize the bottom side of the package desired to be removed from the package carrying platform 16 due to the lower support 82.

In the present example, the second camera 38 is disposed on the lower side of the lower support 82. Thus, as the lower support 82 moves, the second camera 38 moves. Then, in the same manner as in the case where the second camera 38 is disposed on the lower side of the conveyor 52, the second camera 38 can recognize a bottom side of one or more packages, including the bottom side B1b of the package B1 desired to be removed from the package carrying platform 16, a bottom side B3b of the package B3 under the package B1, or the like.

When the package carrying platform 16 is photographed only from the position of the first camera 26 (e.g., obliquely above), work of retracting the lower support 82 from the package carrying platform 16 each time a package is taken out from the package carrying platform 16 to secure the viewing field of the first camera 26 may be necessary. In the present example, the camera 38 is attached to the lower side of the placement 36 (the lower support 82). Thus, the position of the camera 38 can be made closer to the packages B1, B2 and so on as appropriate than the first camera 26. Thus, the camera 38 attached to the lower side of the placement 36 makes it easier to detect the bottom side B1b of the package B1 removed from the package carrying platform 16. Then, the package B1 can be removed in a state where the package collapse of the packages B3 and so on under the package B1 is prevented by the support 40 (the distal end 82a of the lower support 82). Then, the camera 38 can continue to image the packages B3, B5 and so on, on the package carrying platform 16 constantly even when the packages B1 and B2 are removed. Thus, it is unnecessary to retract the lower support 82 from the package carrying platform 16 each time a package is taken out from the package carrying platform 16 so that the state of the remaining packages can be grasped. Then, by using the present apparatus 214, work of removing the next package can be started earlier, and the productivity of removing the packages can be enhanced.

Note that, in the present example, the block diagram of the apparatus 114 of the second example shown in FIG. 10 can be used as it is.

A basic idea for placing the plurality of packages B1 and so on which are placed on the package carrying platform 16 on the lower support 82 by using the apparatus 214 will be described.

Handling methods of each package include sticking fast to the upper face, sticking fast to the front face, raking and the like. The package B1 of the grasping target is decided, the grip 74 is made as close as possible to that package B1. The controller 22 preferentially removes the package in the front row, the uppermost package, and the package in the front row. If the controller 22 can grasp the package B2 in the rear row in addition to the package B1 in the front row by using a grip 76 (see FIG. 13) or the like, the packages B1 and B2 in the front row and the rear row are placed together on the lower support 82.

The controller 22 makes the distal end 82a of the lower support 82 abut the package B3 adjacent to the lower side of the bottom side of the package B1 which is the grasping target. The controller 22 confirms that the distal end 82a of the lower support 82 has been brought into contact with the package B3, pulls out the package B1 thereon by using the grip 74, and places the same on the lower support 82. The lower support 82 moves this package B1 to a different process by, for example, a conveyor (not shown) or the like.

For example, by performing image processing on the image obtained from the first camera 26 or the second camera 38, it is confirmed whether the removal of the package B2 on the uppermost stage from the package carrying platform 16 has been finished. If the removal of the package B2 on the uppermost stage from the package carrying platform 16 has not been finished, the distal end 82a of the lower support 82 is made abut the package B3 positioned under and in front of the bottom side of the package B2 which is the grasping target. Then, by using the grip 74, the package B2 is removed from the package carrying platform 16.

If the removal of the packages B1 and B2 on the uppermost stage has been finished, the position of the bottom side of the package B3 thereunder is searched by the second camera 38 attached to the lower support 82. The package B3 on the uppermost stage is set as the grasping target and removed from the package carrying platform 16. The package B4 in the rear row is also removed from the package carrying platform 16 in the same manner as described above.

By repeating such processing, all the packages B1 and so on are removed from the package carrying platform 16 while the package collapse is prevented. The removed packages are moved to a different process by a conveyor (not shown) or the like, and the processing ends.

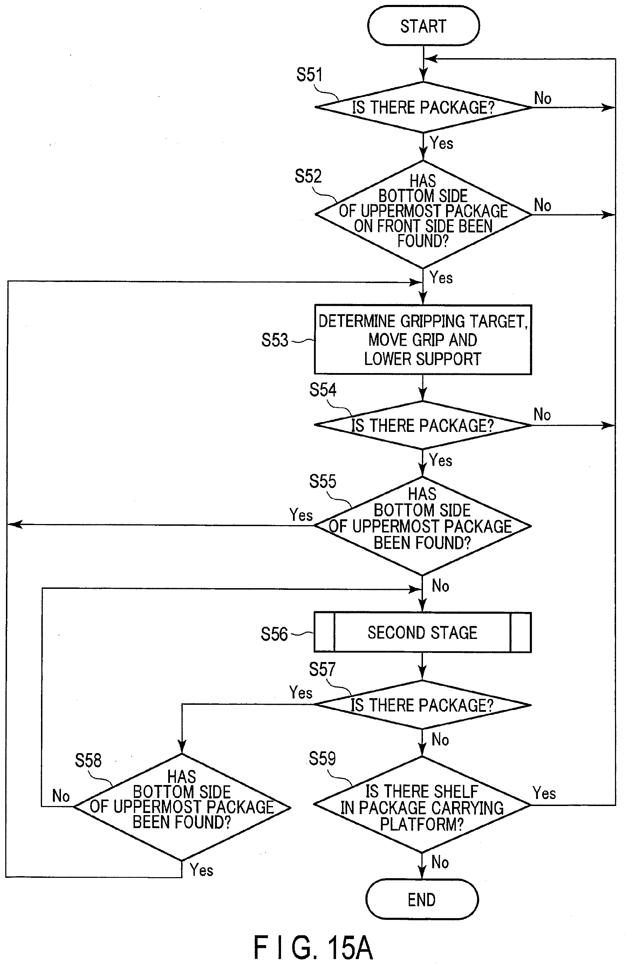

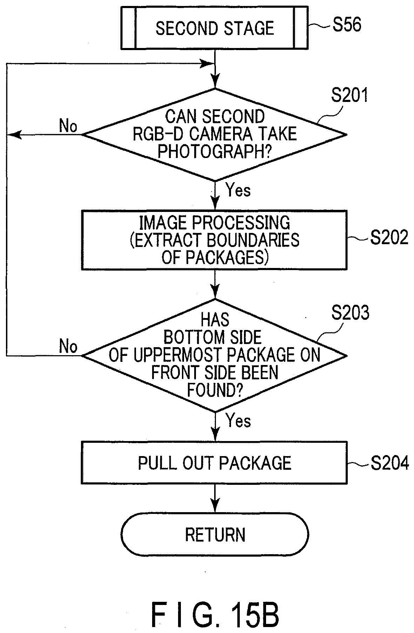

An example of the processing flow of conveying the packages B1, B2 and so on by using this package takeout system 10 will be described using FIGS. 15A and 15B.

Herein, a description is given where the first camera 26 is mainly used up to the second stage (Step S56), but the controller 22 may use the second camera 38 to determine the package that should be removed in an earlier stage.

The controller 22 operate the first camera 26, the first camera 26 photographs a bird's-eye view of the package carrying platform 16 by, for example, the first camera 26 or the like. The controller 22 detects the presence or absence of the packages B1, B2 and so on, on the package carrying platform 16 (Step S51).

When the controller 22 has determined that the packages B1, B2 and so on are on the package carrying platform 16 (Yes in Step S51), the controller 22 uses the first camera 26 to determine whether the bottom side B1b of the uppermost package B1 on the front side of the package carrying platform 16 can be found (Step S52).

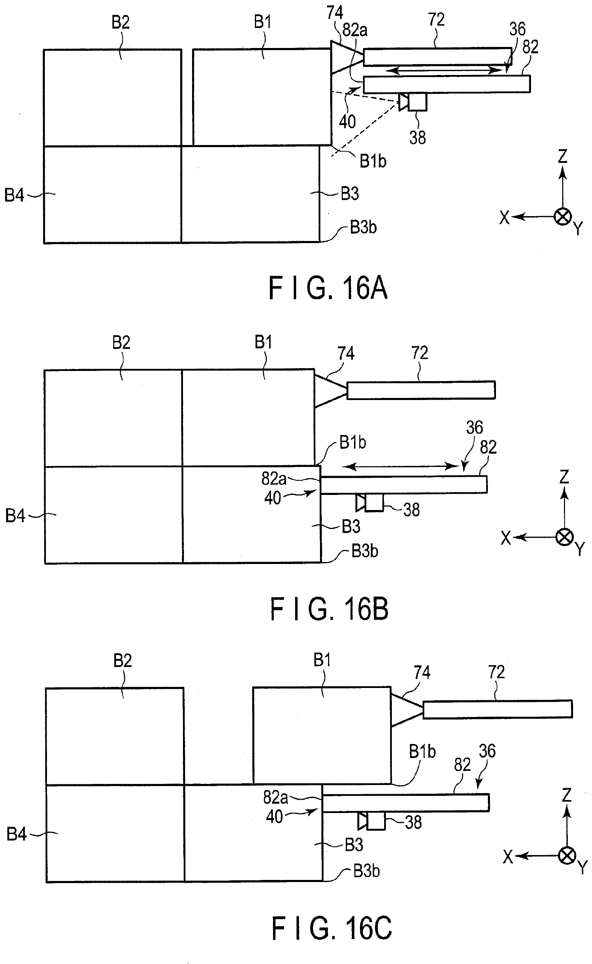

When the bottom side B1b of the package B1 could have been found (Yes in Step S52), the controller 22 determines that the grasping target of the grip 74 is that package B1, and moves the arm 72, the grip 74 and the lower support 82 as appropriate (Step S53). The controller 22 moves the lower support 82 from the position shown in FIG. 16A to the position shown in FIG. 16B. At this time, the distal end 82a of the lower support 82 below the bottom side B1b of the package B1 and abuts the front face of the package B3. The distal end 82a of the lower support 82 is suitably adjacent to the bottom side B1b of the package B1. The package B3 is prevented from moving in the negative X-axis direction by the distal end 82a of the lower support 82. Then, the controller 22 causes a pump 75 to operate so that the front face of the package B1 is stuck fast to and grasped by the grip 74. Thus, as shown in FIG. 16C, the package B1 is moved in the negative X-axis direction with respect to the package B3 and placed on the lower support 82. The controller 22 stops the operation of the pump 75 and causes the lower support 82 to support the package B1. The controller 22 moves the lower support 82 to convey the package B1 to an appropriate position. Thus, the package B1 is moved from the lower support 82 to a different process.

Note that, in a case where, for example, the grip 76 shown in FIG. 13 is used in Step S53, not only the package B1 but also the package B2 on the back face side thereof can be supported by the lower support 82. That is, while the package in the front row, the uppermost package and the package in the front row are prioritized among the packages, if the package in the rear row can be handled, the package in the rear row is also taken. As described above, the handling methods of the packages include sticking fast to the upper face, sticking fast to the front face, raking and the like.

Next, the controller 22 detects again the presence or absence of the packages B2, B3 and so on, on the package carrying platform 16 by the first camera 26 or the like (Step S54).

When the controller 22 has determined that the packages B2 and so on are on the package carrying platform 16 (Yes in Step S54), the controller 22 determines whether the bottom side B2b of the uppermost package B2 on the package carrying platform 16 can be found (Step S55).

In a case where the controller 22 could have determined that the bottom side B2b of the package B2 could have been found (Yes in Step S55), the controller 22 process in Step S53 to remove the package B2 from the package carrying platform 16.

In a case where the controller 22 could have determined that the bottom side B2b of the package B2 could not find (No in Step S55), the controller 22 performs the second stage processing using the second camera 38 (Step S56) .

The second stage processing will be described using FIG. 15B.

The controller 22 determines whether the packages B2, B3 and so on can be imaged by the second camera 38 (Step S201). In a case where the packages B2, B3 and so on can be imaged by the second camera 38 (Yes in Step S201), the controller 22 extracts the boundary between the packages B2 and B3 and the boundary between the packages B3 and B5 (Step S202).

The controller 22 determines whether the bottom side B3b of the uppermost package B3 on the front side of the package carrying platform 16 could have been found (Step S203).

In a case where the controller 22 could have found the bottom side B3b of the uppermost package B3 on the front side of the package carrying platform 16 (Yes in Step S203), the package B3 is pulled out in a state where the package B5 is supported by the distal end 82a of the lower support 82 in the same manner as described in Step S53 (Step S204).

The controller 22 detects the presence or absence of the packages B2, B4 and so on, on the package carrying platform 16 by, for example, the first camera 26 or the like (Step S57).

When the controller 22 has determined that the packages B2 and B4 are on the package carrying platform 16 (Yes in Step S57), it is determined whether the bottom side B2b of the uppermost package B2 on the package carrying platform 16 could have been found (Step S58).

In a case where the bottom side B2b of the package B2 could have been found (Yes in Step S58), the package B2 is removed from the package carrying platform 16 by the processing in Step S53.

In a case where the bottom side B2b of the package B2 could not find (No in Step S58), the second stage processing is performed.

When the controller 22 has determined that there is no package on the package carrying platform 16 in Step S57 (No in Step S57), the presence or absence of a shelf 16a (see FIG. 9A) in the package carrying platform 16 is determined. In a case where the controller 22 has determined the presence of the shelf 16a (Yes in Step S59), the processing in Step S51 is performed as to whether there is a package under the shelf 16a.

By repeating such processing, the packages B1, B2 and so on placed on the package carrying platform 16 are removed from the package carrying platform 16 and conveyed to a predetermined position.

Then, in a case where the controller 22 has determined the absence of the shelf 16a (No in Step S59), the processing of removing the packages from the package carrying platform 16 ends.

By using the apparatus 214 according to the present example, it is possible to perform the processing of conveying the packages from the package carrying platform 16 as appropriate even if the shelf 16a is present in the package carrying platform 16.

By disposing the second camera 38 on the lower side of the lower support 82, it is possible to recognize one after another the bottom sides of the packages that was difficult to be imaged by the first camera 26. Thus, it is possible to securely remove the packages from the package carrying platform 16.

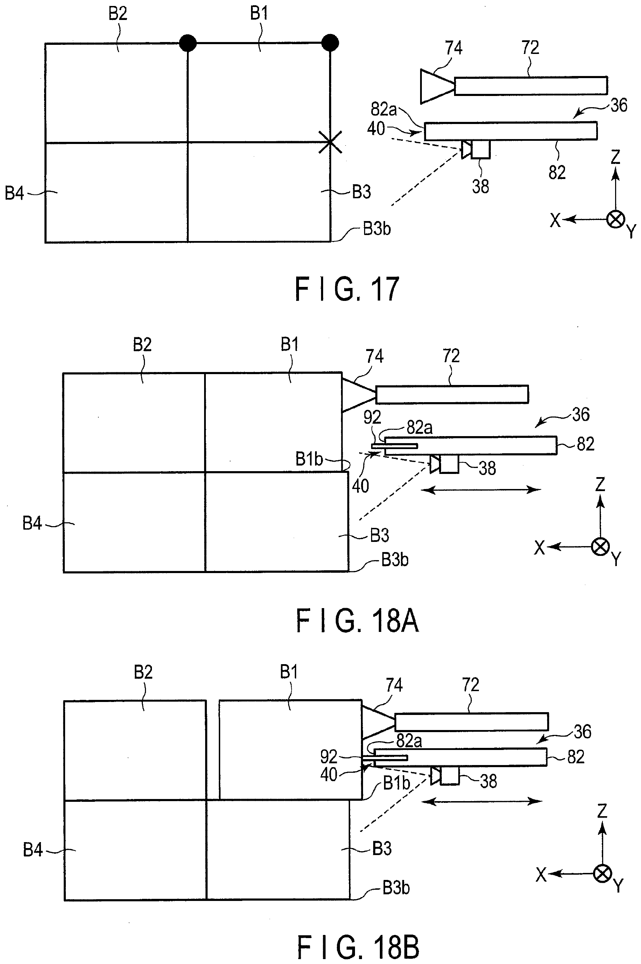

Herein, there may be a case where the controller 22 cannot recognize the bottom side B1b of the package B1 shown in FIG. 17, for example, in the image information captured by the second camera 38.

In this case, as shown in FIG. 16A, the grip 74 grasps the front face of the package B1 and moves the same in the negative X-axis direction, for example, by several millimeters or the like. Then, the second camera 38 measures the change in the displacement of the packages B1 and B3.

The distance from the package B1 to the second camera 38 changes, but the distance from the package B3 to the second camera 38 does not change. Thus, even if the bottom side B1b of the package B1 cannot be detected merely by imaging the packages B1 and B3 with the camera 38, the controller 22 can grasp the position of the package B3 by moving the package B1 while maintaining the position of the camera 38 as appropriate. Thus, the controller 22 can grasp the bottom side B1b of the package B1.

The third example can provide an unloading apparatus that can recognize in an earlier stage a package removed next and a method of detecting a package adjacent to the package while preventing package collapse in a case of repeating work of removing a package from a package carrying platform where packages with various shapes, such as a box shape and a bag shape, are present.

### (FIRST MODIFICATION EXAMPLE)

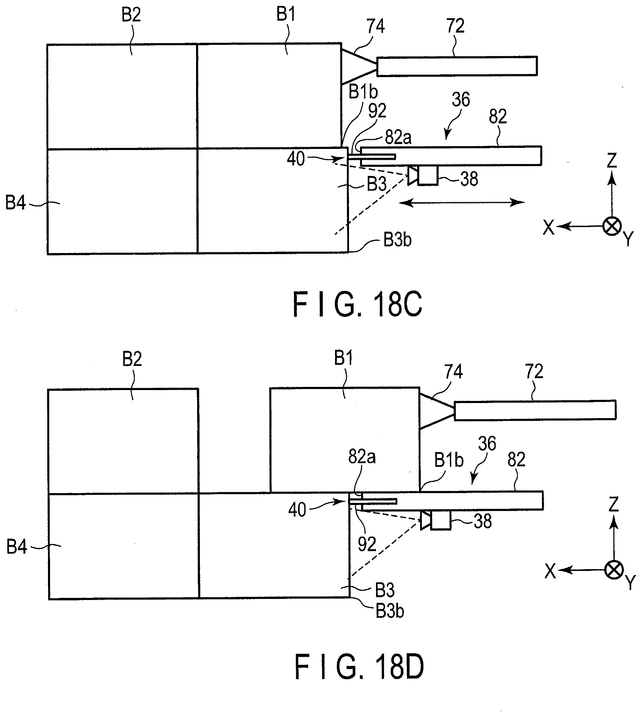

A first modification example will be described using FIG. 18A to 20B.

For example, there may be a case where a controller 22 cannot recognize a bottom side B1b of a package B1 shown in FIG. 17 in image information captured by a second camera 38. Moreover, there is a case where it is desirable that the controller 22 use a different means to confirm the bottom side B1b of the package B1, when the accuracy of the recognition of the bottom side B1b of the package B1 is lower than an appropriate threshold, or in order to securely prevent package collapse.

As shown in FIGS. 18A to 18D, in a support 40 according to the present modification example, a displacement sensor 92 is arranged at a distal end 82a of a lower support 82. As the displacement sensor 92, a contact type or a non-contact type using light or the like can be used as appropriate. Herein, an example will be described in which a contact type touch sensor is used as the displacement sensor 92.

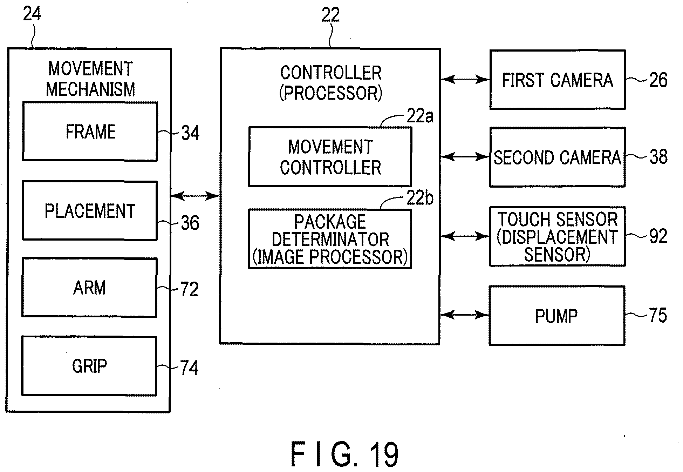

As shown in FIG. 19, the displacement sensor 92 is connected to the controller 22. Thus, it is possible to move a movement mechanism 24 as appropriate based on information from the displacement sensor 92.

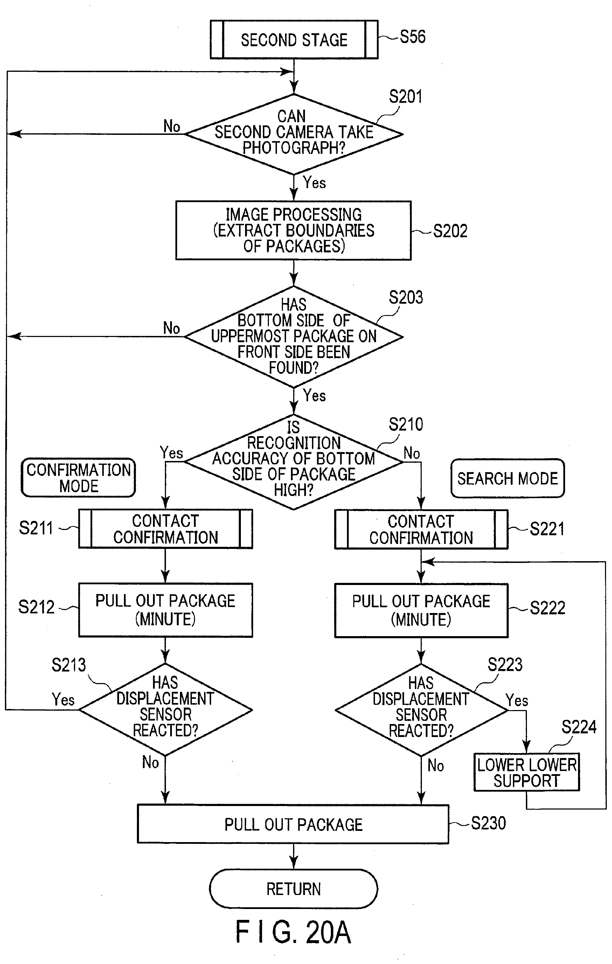

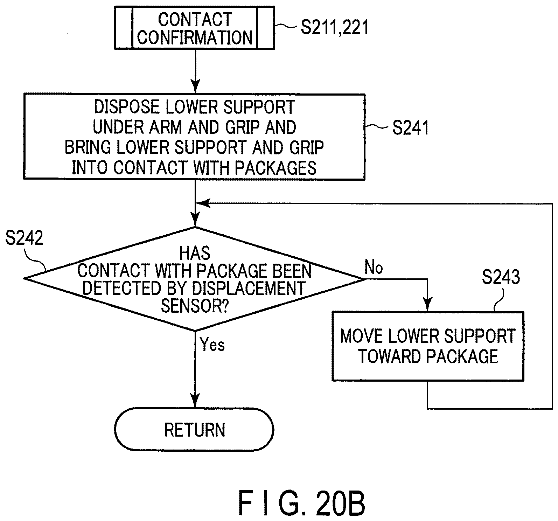

The processing flow of this apparatus 214 is the same as that shown in FIG. 15A. The second stage follows the flows shown in FIGS. 20A and 20B as an example. The flows shown in FIGS. 20A and 20B describe a method of detecting a grasped package/supported package in which it is determined that the distal end 82a of the lower support 82 supports the package B1 or supports a package B3, for example, when the bottom side B1b of the package B1 removed from a package carrying platform 16, that is, the boundary between the packages B1 and B3 adjacent in the Z-axis direction could not be recognized.

The processing from Steps S201 to S203 shown in FIG. 20A is the same as the processing shown in FIG. 15B.

In a case where the controller 22 has found the bottom side B1b of the uppermost package B1 on the front side of the package carrying platform 16 (Yes in Step S203), it is determined whether the recognition accuracy of the bottom side B1b of that package B1 is higher than an appropriate threshold (Step S210). The appropriate threshold can be set by a user within a predetermined range.

In a case where the controller 22 has determined that the recognition accuracy of the bottom side B1b of the package B1 is higher than the appropriate threshold (Yes in Step S210), the controller 22 performs confirmation mode processing for confirming whether the bottom side B1b of the package B1 could have been detected (Steps S211 to S213).

The controller 22 performs a contact confirmation test of the displacement sensor 92. The controller 22 disposes the lower support 82 under the arm 72 and the grip 74 and brings the distal end 82a of the lower support 82 into contact with the package B3 and the grip 74 into contact with the package B1 (Step S241).

The controller 22 confirms whether the contact with the package B3 has been detected by the displacement sensor 92 arranged at the distal end 82a of the lower support 82 (Step S242). In a case where the controller 22 has determined that the distal end 82a of the lower support 82 is not in contact with the package B3 (No in Step S242), the controller 22 moves the lower support 82 toward the package B3.

In a case where the controller 22 has determined that the distal end 82a of the lower support 82 is in contact with the package B3 (Yes in Step S242), the package B1 stuck fast to the grip 74 is slightly pulled out by a predetermined distance, for example, several millimeters or the like (Step S212). The controller 22 confirms the reaction of the displacement sensor 92 arranged at the lower support 82 (Step S213). In a case where the controller 22 confirms the displacement sensor 92 has detected displacement the same or substantially the same as the drawing amount of the package B1 stuck fast by the grip 74 (Yes in Step S213), the controller 22 determines that the distal end 82a of the lower support 82 is in contact with the package B1, not with the package B3, and the processing returns to Step S201.

In a case where the controller 22 confirms the displacement sensor 92 has not detected displacement the same or substantially the same as the drawing amount of the package B1 stuck fast by the grip 74 (No in Step S213), the controller 22 determines that the package B3 is supported by the distal end 82a of the lower support 82. Then, in a state where the package B3 is supported by the distal end 82a of the lower support 82, the front face of the package B1 on the upper side thereof is stuck fast by the grip 74 and is moved by a distance greatly exceeding the predetermined distance described in Step S212 to be pulled out (Step S230).

In a case where the controller 22 has determined that the recognition accuracy of the bottom side B3b of the package B3 is lower than the appropriate threshold (No in Step S210), the controller 22 performs search mode processing for searching for the bottom side B3b of the package B3 (Steps S221 to S224).

The controller 22 performs the same contact confirmation test as in Step S211 (Step S221).

In a case where the controller 22 has determined that the distal end 82a of the lower support 82 is in contact with the package B1 or the package B3 (Yes in Step S242), the package B1 stuck fast to the grip 74 is slightly pulled out by a predetermined distance, for example, several millimeters or the like (Step S222). The controller 22 confirms reaction of the displacement sensor 92 arranged at the lower support 82 (Step S223). In a case where the controller 22 confirms the displacement sensor 92 has detected displacement the same or substantially the same as the pulling out amount of the package B1 stuck fast by the grip 74 (Yes in Step S223), the controller 22 determines that the package B1 grasped by the grip 74 and the package B1 supported by the distal end 82a of the lower support 82 are the same. That is, when the movement amount of the grip 74 and the displacement amount detected by the displacement sensor 92 coincide or substantially coincide with each other, the controller 22 determines that a target supported by the distal end 82a of the lower support 82, that is, the support 40 is one or more packages B1. Thus, the controller operates to descend the lower support 82 by an appropriate amount, for example, several centimeters or the like (Step S224). The processing in Step S222 is performed again. Therefore, the one or more packages B1 are drawn again by the predetermined distance in a state where the position of the displacement sensor 92 is lowered by the predetermined distance to bring the displacement sensor 92 in contact with or near the one or more packages B1 or the adjacent package B3, and the one or more packages B1 are grasped.

In a case where the controller 22 confirms the displacement sensor 92 has not detected displacement the same or substantially the same as the pulling out amount of the package B1 stuck fast by the grip 74 (No in Step S223), in a state where the package B3 is supported by the distal end 82a of the lower support 82, the front face of the package B1 on the upper side thereof is stuck fast by the grip 74 and is moved by a distance greatly exceeding the predetermined distance described in Step S222 to be pulled out (Step S230). That is, when the movement amount of the grip 74 and the displacement amount detected by the displacement sensor 92 are different, the controller 22 determines that a target supported by the distal end 82a of the lower support 82, that is, the support 40 is the adjacent package B3.

As described above, there is a case where the bottom side B1b of the package B1 to be supposedly removed is not detected by the camera 38. Even in this case, the detection is possible by supporting the package B1 or supporting the package B3 with the distal end 82a of the lower support 82 or by performing the sequence using the sensor 92. Thus, according to the apparatus 214 of the present modification example, it is possible to continue the package removal processing without stopping the processing of removing the packages B1 and so on from the package carrying platform 16.

Therefore, according to the present modification example, it is possible to provide a method of detecting one or more packages removed next and packages adjacent to the lower sides thereof while preventing package collapse.

### (SECOND MODIFICATION EXAMPLE)

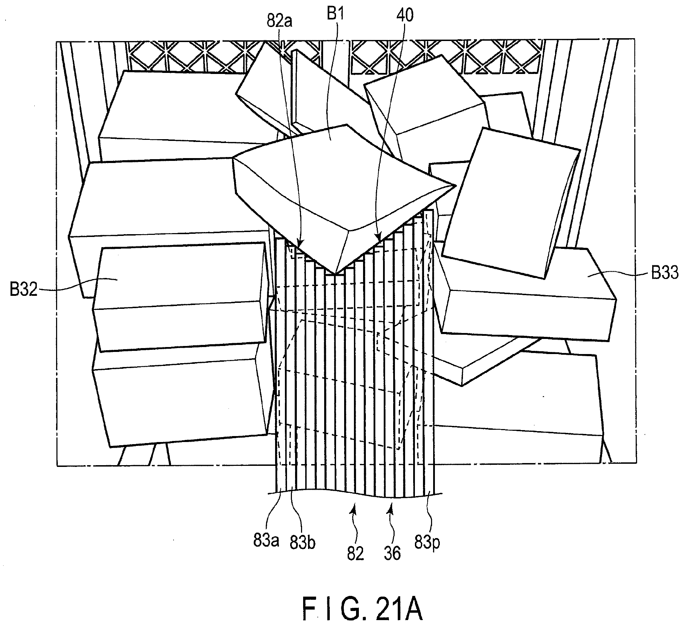

A second modification example will be described using FIG. 21A.

In order to improve the unloading productivity (the amount of packages that can be removed per unit time), it is necessary to enlarge a lower support 82, increase the number of grips 74, and widen the width of a grip (a rake-shaped raking hand) 76 in the Y-axis direction. For example, the packages shown in FIG. 2A are placed on a package carrying platform 16. The boundary of the bottom side of the package could become polygonal as shown in FIG. 2B. In a case where the lower support 82 is fitted under such a package, as shown in FIG. 21A, the lower support 82 suitably has plate-shaped members 83a and 83b to 83p formed in strips.

The plurality of plate-shaped members (lower support plates) 83a and 83b to 83p extend in the X-axis direction. As shown in FIG. 2B, according to information by a first camera 26, a controller 22 can extract the uppermost side (a bold alternate long and short dash line) of a package B1 in the front row. Distal ends 82a of the respective plate-shaped members 83a and 83b to 83p of the lower support 82 can be arranged at the uppermost package B1 in the front row. Thus, the plate-shaped members 83a and 83b to 83p of the lower support 82 support a package B31 under the package B1 desired to be removed shown in FIG. 21A. Thus, when the package B1 is grasped by the grip 74 and placed on the plate-shaped members 83a and 83b to 83p, the occurrence of the package collapse of packages B31, B32 and B33 under the package B1 is prevented.

### (THIRD MODIFICATION EXAMPLE)

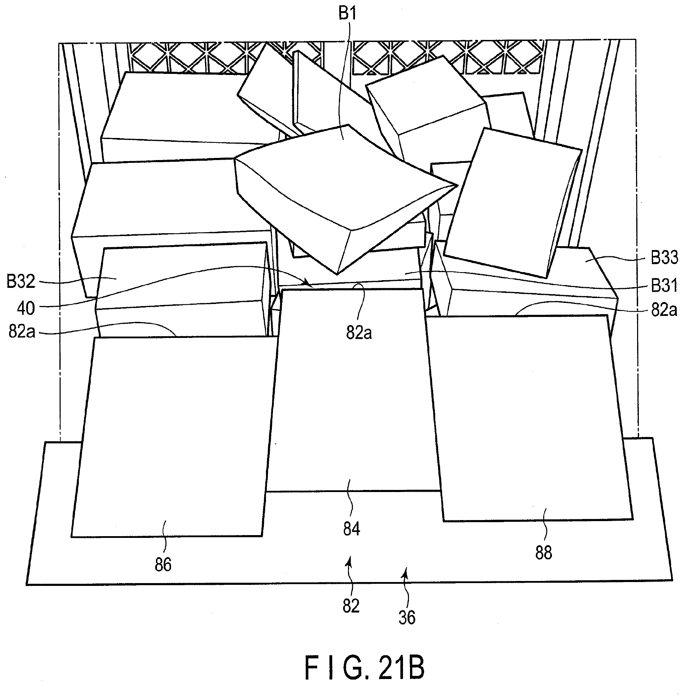

A third modification example will be described using FIG. 21B. This modification example is a further modification example of the second modification example.

As shown in FIG. 21B, three (a plurality of) plate-shaped members (lower support plates) 84, 86 and 88 of a lower support 82 extend in the X-axis direction. Herein, the widths of the plate-shaped members (the lower support plates) 84, 86 and 88 are wide in the Y-axis direction compared with those of the plate-shaped members 83a and 83b to 83p described in the second modification example. When the widths of the plate-shaped members 83a and 83b to 83p are combined, the combined width become substantially the same as, for example, the width of the plate-shaped member 84.

Moreover, the widths of the three (the plurality of) plate-shaped members (the lower support plates) 84, 86 and 88 are slightly shorter than the width of a package carrying platform 16 along the Y-axis direction. Thus, the plate-shaped members (the lower support plates) 84, 86 and 88 can be inserted into the package carrying platform 16 in a state of being parallel to the XY plane.

Not only a package B31, preferably right under a package B1 desired to be removed, is supported by a distal end 82a of the plate-shaped member 84, but also a package B32 positioned in the negative Y-axis direction thereof is supported by a distal end 82a of another plate-shaped member 86. Furthermore, not only the package B31, preferably right under the package B1 desired to be removed, is supported by the distal end 82a of the plate-shaped member 84, but also a package B33 positioned in the positive Y-axis direction thereof is supported by a distal end 82a of still another plate-shaped member 88.

Thus, when the package B1 is grasped by a grip 74 and placed on the plate-shaped members 84, the occurrence of the package collapse of the packages B31, B32 and B33 under the package B1 is prevented. Further, even if the package collapse of the packages occurs, the packages are prevented from entering under the lower support 82 having a width slightly shorter than the width of the package carrying platform 16.

### (FOURTH MODIFICATION EXAMPLE)

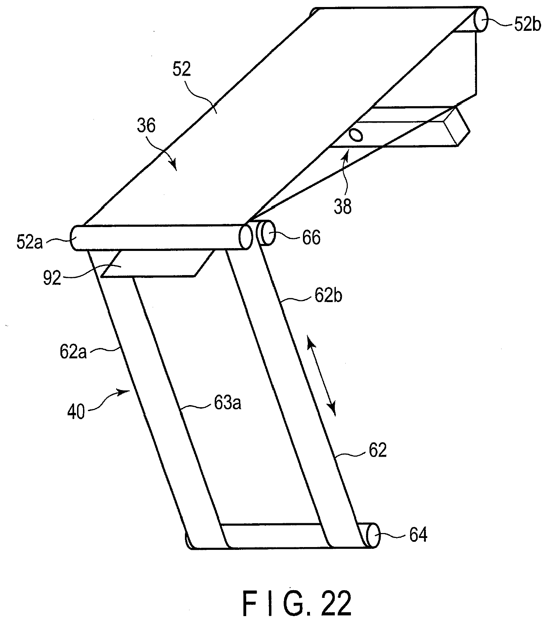

A fourth modification example will be described using FIG. 22.

In the first modification example of the third example, the example has been described in which the displacement sensor 92 is arranged at the distal end 82a of the lower support 82. A displacement sensor 92 may be arranged at a distal end (a distal side cylindrical shaft (a distal portion) 52a of a conveyor 52) of a placement 36 or at a distal (a cylinder 66) of a support 40, which have been described in the second example. In this case, even if a bottom side B1b of a package B1 desired to be removed cannot be confirmed in image information from a second camera 38, the bottom side B1b of the package B1 desired to be removed can be detected.

The present disclosure also encompasses the following examples of an unloading apparatus which is configured to unload a package placed on a package carrying platform, and a method of detecting a package adjacent to the package:
1. An unloading apparatus comprising:
   a placement configured to direct to a package carrying platform loaded with a package and on which the package is placed when the package is taken out from the package carrying platform;
   a movement mechanism configured to move the package toward the placement;
   a camera attached to a lower side of the placement in a state the placement directs to the package carrying platform and configured to detect a bottom side of the package; and
   a support enabling the camera to detect the bottom side of the package while supporting an adjacent package to a lower side of the bottom side of the package when the package is taken out from the package carrying platform and placed on the placement.
2. The unloading apparatus according to clause 1, wherein the camera is configured to detect a distance between the package and the adjacent package or the package carrying platform.
3. The unloading apparatus according to clause 1 or 2, wherein the support has one end attached to the placement, the other end attached to a fixed portion, and a sheet-shaped member configured to change a size thereof when the one end moves with respect to the fixed portion according to a position of the placement.
4. The unloading apparatus according to clause 3, wherein the sheet-shaped member has a window configured to image the bottom side of the package and the adjacent package with the camera.
5. The unloading apparatus according to clause 3 or 4, wherein the sheet-shaped member includes an infrared ray absorbing material.
6. The unloading apparatus according to clause 3 or 4, wherein the sheet-shaped member includes an infrared ray transmitting material.
7. The unloading apparatus according to any one of clauses 1 to 6, wherein the placement includes a conveyor configured to separate the package from the package carrying platform when the package is taken out from the package carrying platform and placed on the placement.
8. The unloading apparatus according to any one of clauses 1 to 7, wherein:
   the movement mechanism is configured to incline the package carrying platform and the placement in a state where the adjacent package is supported by the support, and
   the package on the package carrying platform is placed on the placement when the movement mechanism is inclined in a state where the adjacent package is supported by the support.
9. The unloading apparatus according to clause 1, wherein the placement and the support are formed by a plurality of lower support plates configured to support the adjacent package as well as the lower support plates onto which the package is taken out from the package carrying platform and placed.
10. The unloading apparatus according to any one of clauses 1 to 7, wherein:
   the movement mechanism includes a grip provided above the placement and is configured to grasp the adjacent package, and
   the unloading apparatus further comprises a controller configured to control the grip, the camera and the placement.
11. The unloading apparatus according to clause 10, further comprising a displacement sensor configured to be controlled by the controller, provided on at least one of the placement or the support, and configured to detect contact with the package and/or the adjacent package and displacement with respect to the package and/or the adjacent package.
12. The unloading apparatus according to clause 11, wherein the controller is configured to determine that a target supported by the support is the package when a movement amount of the grip and a displacement amount detected by the displacement sensor coincide or substantially coincide with each other, and is configured to descend the placement toward the adjacent package.
13. The unloading apparatus according to clause 11, wherein the controller is configured to determine that a target supported by the support is the adjacent package when a movement amount of the grip and a displacement amount detected by the displacement sensor are different.
14. An unloading apparatus comprising:
   a placement on which a package taken out from a package carrying platform is placed;
   a support configured to support an adjacent package to a lower side of a bottom side of the package;
   a camera provided on a lower side of the placement and configured to image the package on the package carrying platform from the lower side of the placement; and
   a controller configured to
      control the placement and the camera,
      detect the bottom side of the package based on information captured by the camera,
      dispose the placement and a distal end of the support at the adjacent package to the lower side of the bottom side of the package, and
      place the package on the placement in a state where the adjacent package is supported by the support.
15. The unloading apparatus according to clause 14, further comprising:
   a grip configured to grasp the package and configured to draw the package in a state of grasping the package; and
   a displacement sensor provided at the support and configured to detect displacement of the package or the adjacent package with respect to the support,
   wherein:
      the placement is provided under the grip,
      the package drawn by the grip is placed on the placement, and
      the controller
         is configured to determine that the displacement sensor is in contact with a package the same as the package and the support supports the package the same as the package in a case that a drawing amount of the package and displacement measured by the displacement sensor coincide or substantially coincide with each other when the package is drawn by a predetermined distance, in a state where the package is grasped by the grip, the displacement sensor is brought into contact with or near the package or the adjacent package, and the package or the adjacent package is supported by the support;
         is configured to draw the package again by a predetermined distance in a state where a position of the displacement sensor is lowered by a predetermined distance, the displacement sensor is brought into contact with or near the package or the adjacent package, and the package is grasped; and
         is configured to determine that the displacement sensor is in contact with the adjacent package in a case that a drawing amount of the package and displacement measured by the displacement sensor are different.
16. The unloading apparatus according to clause 15, wherein the controller is configured to move the grip by a distance exceeding the predetermined distance and is configured to put the package on the placement when the controller is determined that the displacement sensor is in contact with the adjacent package.
17. A method of detecting a package or a package adjacent to a lower side of the package, the method comprising:
   grasping the package;
   bringing a displacement sensor into contact with or near the adjacent package to the package or a lower side of a bottom side of the package under a position where the package is grasped, to support the package or the adjacent package;
   drawing the package in state of grasping the package;
   determining that the displacement sensor is in contact with a package the same as the package and the package the same as package is supported by the displacement sensor when a drawing amount of the package and displacement measured by the displacement sensor coincide or substantially coincide with each other;
   lowering a position of the displacement sensor by a predetermined distance to bring the displacement sensor into contact with or near the package or the adjacent package to support the package or the adjacent package;
   drawing the package in a state where the package is grasped; and
   determining that the displacement sensor is in contact with the adjacent package when a drawing amount of the package and displacement measured by the displacement sensor are different.
   While certain examples have been described, these examples have been presented by way of example only, and are not intended to limit the scope of the claims. Indeed, the apparatuses described herein may be embodied in a variety of other forms; furthermore, various omissions, substitutions and changes in the form of the apparatuses described herein may be made.

## Claims

1. An unloading apparatus comprising:
a placement configured to direct to a package carrying platform loaded with a package and on which the package is placed when the package is taken out from the package carrying platform;
a movement mechanism configured to move the package toward the placement;
a camera attached to a lower side of the placement in a state that the placement directs to the package carrying platform and configured to detect a bottom side of the package; and
a support enabling the camera to detect the bottom side of the package while supporting an adjacent package to a lower side of the bottom side of the package when the package is taken out from the package carrying platform and placed on the placement.

2. The unloading apparatus according to claim 1, wherein the camera is configured to detect a distance between the package and the adjacent package or the package carrying platform.

3. The unloading apparatus according to claim 1 or 2, wherein the support has one end attached to the placement, the other end attached to a fixed portion, and a sheet-shaped member configured to change a size thereof when the one end moves with respect to the fixed portion according to a position of the placement.

4. The unloading apparatus according to claim 3, wherein the sheet-shaped member has a window configured to image the bottom side of the package and the adjacent package with the camera.

5. The unloading apparatus according to claim 3 or 4, wherein the sheet-shaped member includes an infrared ray absorbing material.

6. The unloading apparatus according to claim 3 or 4, wherein the sheet-shaped member includes an infrared ray transmitting material.

7. The unloading apparatus according to any one of claims 1 to 6, wherein the placement includes a conveyor configured to separate the package from the package carrying platform when the package is taken out from the package carrying platform and placed on the placement.

8. The unloading apparatus according to any one of claims 1 to 7, wherein:
the movement mechanism is configured to incline the package carrying platform and the placement in a state where the adjacent package is supported by the support, and
the package on the package carrying platform is placed on the placement when the movement mechanism is inclined in a state where the adjacent package is supported by the support.

9. The unloading apparatus according to claim 1, wherein the placement and the support are formed by a plurality of lower support plates configured to support the adjacent package as well as the lower support plates onto which the package is taken out from the package carrying platform and placed.

10. The unloading apparatus according to any one of claims 1 to 7, wherein:
the movement mechanism includes a grip provided above the placement and configured to grasp the adjacent package, and
the unloading apparatus further comprises a controller configured to control the grip, the camera and the placement.

11. The unloading apparatus according to claim 10, further comprising a displacement sensor configured to be controlled by the controller, provided on at least one of the placement or the support, and configured to detect contact with the package and/or the adjacent package and displacement with respect to the package and/or the adjacent package.

12. The unloading apparatus according to claim 11, wherein the controller is configured to determine that a target supported by the support is the package when a movement amount of the grip and a displacement amount detected by the displacement sensor coincide or substantially coincide with each other, and is configured to descend the placement toward the adjacent package.

13. The unloading apparatus according to claim 11, wherein the controller is configured to determine that a target supported by the support is the adjacent package when a movement amount of the grip and a displacement amount detected by the displacement sensor are different.

14. An unloading apparatus comprising:
a placement on which a package taken out from a package carrying platform is placed;
a support configured to support an adjacent package to a lower side of a bottom side of the package;
a camera provided on a lower side of the placement and configured to image the package on the package carrying platform from the lower side of the placement; and
a controller configured to
control the placement and the camera,
detect the bottom side of the package based on information captured by the camera,
dispose the placement and a distal end of the support at the adjacent package to the lower side of the bottom side of the package, and
place the package on the placement in a state where the adjacent package is supported by the support.

15. The unloading apparatus according to claim 14, further comprising:
a grip configured to grasp the package and configured to draw the package in a state of grasping the package; and
a displacement sensor provided at the support and configured to detect displacement of the package or the adjacent package with respect to the support,
wherein:
the placement is provided under the grip,
the package drawn by the grip is placed on the placement, and
the controller
is configured to determine that the displacement sensor is in contact with a package the same as the package and the support supports the package the same as the package in a case that a drawing amount of the package and displacement measured by the displacement sensor coincide or substantially coincide with each other when the package is drawn by a predetermined distance, in a state where the package is grasped by the grip, the displacement sensor is brought into contact with or near the package or the adjacent package, and the package or the adjacent package is supported by the support;
is configured to draw the package again by a predetermined distance in a state where a position of the displacement sensor is lowered by a predetermined distance, the displacement sensor is brought into contact with or near the package or the adjacent package, and the package is grasped; and
is configured to determine that the displacement sensor is in contact with the adjacent package in a case that a drawing amount of the package and displacement measured by the displacement sensor are different.

16. The unloading apparatus according to claim 15, wherein the controller is configured to move the grip by a distance exceeding the predetermined distance and is configured to put the package on the placement when the controller is determined that the displacement sensor is in contact with the adjacent package.

17. A method of detecting a package or a package adjacent to a lower side of the package, the method comprising:
grasping the package;
bringing a displacement sensor into contact with or near the adjacent package to the package or a lower side of a bottom side of the package under a position where the package is grasped, to support the package or the adjacent package;
drawing the package in state of grasping the package;
determining that the displacement sensor is in contact with a package the same as the package and the package the same as package is supported by the displacement sensor when a drawing amount of the package and displacement measured by the displacement sensor coincide or substantially coincide with each other;
lowering a position of the displacement sensor by a predetermined distance to bring the displacement sensor into contact with or near the package or the adjacent package to support the package or the adjacent package;
drawing the package in a state where the package is grasped; and
determining that the displacement sensor is in contact with the adjacent package when a drawing amount of the package and displacement measured by the displacement sensor are different.
